# EUROPÄISCHE PATENTSCHRIFT

(11) **EP 3 083 824 B1**
(45) Veröffentlichungstag und Bekanntmachung des Hinweises auf die Patenterteilung: **27.09.2017**
(21) Anmeldenummer: 14814885.1
(22) Anmeldetag: 18.12.2014
(51) Int. Cl.: C08L 25/12, C08L 55/02, B29C 67/00, B33Y 70/00, C08F 279/04

(54) **FORMMASSEN BASIEREND AUF VINYLAROMAT-COPOLYMEREN FÜR DEN 3D DRUCK**
MOULDING COMPOSITIONS BASED ON VINYLAROMATIC COPOLYMERS FOR 3D PRINTING
MATIÈRES À MOULER À BASE DE COPOLYMÈRES VINYL-AROMATIQUES POUR L'IMPRESSION EN 3D

(30) Priorität: 18.12.2013 EP 13198147
(43) Veröffentlichungstag der Anmeldung: 26.10.2016
(73) Patentinhaber: INEOS Styrolution Group GmbH, 60325 Frankfurt (DE)
(72) Erfinder: NIESSNER, Norbert, 67159 Friedelsheim (DE); EISENTRÄGER, Frank, 50996 Köln (DE); BAUMANN, Stéphanie, 97072 Würzburg (DE); RADOVANOVIC, Itana, 67117 Limburgerhof (DE); SCHMIDT, Hans-Werner, 95444 Bayreuth (DE); MEINERS, Josef, 47798 Krefeld (DE); WIEBERGER, Florian, 96050 Bamberg (DE)
(74) Vertreter: Jacobi, Markus Alexander
(86) Internationale Anmeldenummer: PCT/EP2014/078494
(87) Internationale Veröffentlichungsnummer: WO 2015/091817

(56) Entgegenhaltungen:
- DE-A1-102007 061 445
- US-A1- 2009 295 032

## Beschreibung

Die Erfindung betrifft Formmassen basierend auf Vinylaromat-Copolymeren mit verbessertem Zähigkeits/Viskositäts-Verhältnis und deren Verwendung für den 3D-Druck.

Die Verwendung von amorphen Thermoplasten für den 3D-Druck, insbesondere von Acrylnitril-Butadien-Styrol (ABS), ist bekannt. So wird in der EP-A 1015215 ein Verfahren zur Herstellung eines dreidimensionalen Objekts von vorbestimmter Form aus einem thermisch verfestigbaren Material beschrieben. Für den 3D-Druck wird zunächst das Material verflüssigt und extrudiert, unter Bewegung werden mehrere Schichten des Materials auf einen Träger aufgebracht, und dann wird das geformte Material durch Kühlen unter die Erstarrungstemperatur des Materials verfestigt. Als thermisch verfestigbares Material werden amorphe Thermoplasten, insbesondere Acrylnitril-Butadien-Styrol (ABS), verwendet.

EP-A 1087862 beschreibt ein Rapid-Prototyping-System zur Herstellung eines dreidimensionalen Gegenstands durch Extrusion und Aufbringen von erstarrbarem thermoplastischem Modellier- und Stützmaterial in mehreren Schichten. Das thermoplastische Material wird über eine Spule zugeführt. Als geeignetes modellierbares Material wird ABS genannt. Als brüchiges Stützmaterial, welches nach Fertigstellung des 3D-Modells entfernt wird, wird eine Mischung aus ABS und einem Polystyrol-Copolymer als Füllmaterial mit einem Anteil von bis zu 80% eingesetzt.

EP-A 1497093 beschreibt ein Verfahren zur Herstellung eines Prototyps eines Kunststoffspritzteils aus einem thermoplastischen Material, das verflüssigt in eine Form eingespritzt wird bis es deren Hohlraum ausfüllt und nach Aushärten den Prototyp bildet. Der Prototyp wird dabei via "Fused Deposition Modeling", einer speziellen 3D Druckmethode hergestellt. Das thermoplastische Material wird ausgewählt aus: ABS, Polycarbonat, Polystyrol, Acrylaten, amorphen Polyamiden, Polyestern, PPS, PPE, PEEK, PEAK und Mischungen davon, bevorzugt ist ABS. Um Schrumpfphänomene zu vermeiden werden vorzugsweise amorphe Thermoplasten eingesetzt.

US 2008/0071030 beschreibt ein thermoplastisches Material, welches zur Herstellung von dreidimensionalen Modellen durch mehrschichtige Abscheidung verwendet wird.

Das thermoplastische Material enthält ein Basispolymer, ausgewählt aus der Gruppe bestehend aus:
Polyethersulfonen, Polyetherimiden, Polyphenylsulfonen, Polyphenylenen, Polycarbonaten, Polysulfonen, Polystyrolen, Acrylaten, amorphen Polyamiden, Polyestern, Nylon, Polyetheretherketonen und ABS, und 0,5 bis 10 Gew.-% eines Silikon-Trennmittels. Bevorzugt wird als Basispolymer Polyethersulfon eingesetzt und Mischungen davon mit Polystyrol (3 bis 8 Gew.-%). Zur Vermeidung von Schrumpf werden vorzugsweise amorphe Polymere und gegebenenfalls übliche Füllmaterialien eingesetzt.

In der US 2009/0295032 werden für den 3D-Druck modifizierte ABS Materialien vorgeschlagen. Die ABS-Materialien werden durch zusätzliche Monomere, Oligo- oder Polymere, insbesondere Acrylate modifiziert. Beispielhaft werden MMA-modifizierte ABS/Poly(Styrol-Acrylnitril)-Blends, insbesondere CYCOLAC ABS MG 94, genannt. Die Proportionen der Komponenten und die Viskosität der Blends werden nicht angegeben.

Die vorgenannten Materialien sind jedoch oftmals für den 3D-Druck zu spröde und in Bezug auf die Zähigkeit sowie ihren Geruch verbesserungsbedürftig. Darüber hinaus ist bei den Materialien des Standes der Technik oftmals auch die Viskosität unter den Bedingungen des Schmelzflussindexes bei niedrigen Scherraten zu hoch und ebenfalls verbesserungsbedürftig.

Eine Aufgabe der vorliegenden Erfindung ist es, verbesserte, geruchsarme thermoplastische Materialien für den 3-D-Druck mit optimiertem Zähigkeits/Viskositäts-Verhältnis bereitzustellen. Eine weitere Aufgabe der vorliegenden Erfindung ist es Formmassen für den 3D-Druck bereitzustellen, die den 3D-Druck nach dem Fused Deposition Modeling-Verfahren mit einer hohen Extrusionsgeschwindigkeit ermöglichen. Eine weitere Aufgabe der Erfindung ist die Bereitstellung von Formmassen, die sich zur Herstellung von Filamenten mit hoher Dimensionsstabilität für den 3D-Druck eignen. Darüber hinaus ist es eine weitere Aufgabe der Erfindung Formmassen bereitzustellen, die eine hohe Druckqualität bei Verwendung im 3D-Druck nach dem Fused Deposition Modeling-Verfahren aufweisen. Die Aufgabe wurde gelöst durch Formmassen wie nachstehend beschrieben und deren Verwendung für den 3D-Druck.

Ein Gegenstand der Erfindung ist eine thermoplastische Formmasse für den 3D-Druck, enthaltend eine Polymermischung A aus den Komponenten a und b:
a: 30 bis 95 Gew.-% mindestens eines Polymers a mit einer mittleren Molmasse Mw von 150.000 bis 360.000 g/mol, ausgewählt aus:
   Vinylaromat-Copolymeren ausgewählt aus der Gruppe bestehend aus: Styrol-Acrylnitril-Copolymeren, α-Methylstyrol-Acrylnitril-Copolymeren, Styrol-Maleinsäureanhydrid-Copolymeren, Styrol-Phenylmaleinimid-Copolymeren, Styrol-Methylmethacrylat-Copolymeren, Styrol-Acrylnitril-Maleinsäureanhydrid-Copolymeren, Styrol-Acrylnitril-Phenylmaleinimid-Copolymeren, α-Methylstyrol-Acrylnitril-Methylmethacrylat-Copolymeren, α-Methylstyrol-Acrylnitril-t-Butylmethacrylat-Copolymeren und Styrol-Acrylnitril-t-Butylmethacrylat-Copolymeren,
b: 5 bis 70 Gew.-% mindestens eines Schlagzähmodifikators b, mit
   b1: 20-90 Gew.-% einer Pfropfgrundlage eines oder mehrerer Monomere, bestehend aus:
      b11: 70 bis 100 Gew.-% mindestens eines konjugierten Diens und/oder mindestens eines Acrylats;
      b12: 0 bis 30 Gew.-% mindestens eines weiteren Comonomers ausgewählt aus: Styrol, α-Methylstyrol, Acrylnitril, Methacrylnitril, MMA, MSA und N-Phenylmaleinimid (N-PMI);
      b13: 0 bis 10 Gew.-% eines oder mehrerer polyfunktioneller, vernetzender Monomere, die, falls Komponente b11 Acrylat ist, in Mengen von mindestens 0.1 Gew % enthalten sein sollen,
   b2: 10 bis 80 Gew.-% einer Pfropfauflage eines oder mehrerer Monomere, bestehend aus:
      b21: 65 bis 95 Gew.-%, bevorzugt 70 bis 90 Gew.-%, insbesondere 72,5 bis 85 Gew.-%, oftmals besonders bevorzugt 75 bis 85 Gew.% mindestens eines vinylaromatischen Monomeren, vorzugsweise Styrol und/oder α-Methylstyrol, insbesondere Styrol;
      b22) 5 bis 35 Gew.-%, bevorzugt 10 bis 30 Gew.-%, insbesondere 15 bis 27,5 Gew.-%, oftmals besonders bevorzugt 15 bis 25 Gew.-% Acrylnitril und/oder Methacrylnitril, vorzugsweise Acrylnitril,
      b23) 0 bis 30 Gew.-%, bevorzugt 0 bis 20 Gew.-%, besonders bevorzugt 0 bis 15 Gew.-% mindestens eines weiteren monoethylenisch ungesättigten Monomeren ausgewählt aus: MMA, MSA und N-PMI;
   wobei die Summe aus a und b 100 Gew.-% ergibt,
   dadurch gekennzeichnet, dass die Viskosität (gemessen nach ISO 11443) der Formmasse bei Scherraten von 1 bis 10 1/s und bei Temperaturen von 250 °C nicht höher als 1x10⁵ Pa*s ist und die Melt Volume Rate (MVR, gemessen nach ISO 1133 bei 220°C und 10 kg Last) mehr als 6 ml/10 min beträgt.

Die Summe der in Gew.-% angegebenen Mengen der Komponenten b11, b12 und gegebenfalls b13, sowie die Summe der in Gew.-% angegebenen Mengen der Komponenten b21, b22 und gegebenfalls b23 ergibt immer 100 Gew.-%.

Die Bestimmung der gewichtsmittleren Molmasse Mw erfolgt mittels GPC (Lösungsmittel: Tetrahydrofuran, Polystyrol als Polymerstandard) mit UV-Detektion.

Im Sinne der vorliegenden Erfindung ist unter 3D-Druck die Herstellung von dreidimensionalen Formkörpern mit Hilfe einer für den 3D-Druck geeigneten Vorrichtung (3D-Drucker) zu verstehen.

In der erfindungsgemäßen Formmasse beträgt der Anteil der Polymermischung A im Allgemeinen 40 bis 100 Gew.-%, bevorzugt 70 bis 100 Gew.-%, ganz besonders bevorzugt 80 bis 100 Gew.-%, bezogen auf die gesamte Formmasse.

Die erfindungsgemäße Formmasse kann gegebenenfalls zusätzlich mindestens ein weiteres Polymer B ausgewählt aus Polycarbonaten, Polyamiden, Poly(meth)acrylaten, Polyestern und Vinylaromat-Dien-Copolymeren (SBC) enthalten. Der Anteil des Polymers B beträgt im Allgemeinen 0 bis 60 Gew.-%, bevorzugt 0 bis 30 Gew.-%, besonders bevorzugt 0 bis 20 Gew.-%, bezogen auf die gesamte Formmasse. Falls Polymer B in der Formmasse vorhanden ist, beträgt dessen Mindestanteil üblicherweise 0,1 Gew.-%.

Ferner kann die erfindungsgemäße Formmasse gegebenenfalls übliche Additive und/oder Hilfsmittel C enthalten. Der Anteil der Additive und/oder Hilfsmittel C beträgt im Allgemeinen 0 bis 50 Gew.-%, bevorzugt 0,1 bis 30, besonders bevorzugt 0,2 bis 10 Gew.-%, bezogen auf die gesamte Formmasse. Falls Additive und/oder Hilfsmittel C in der Formmasse vorhanden sind, beträgt deren Mindestanteil üblicherweise 0,1 Gew.-%.

Die Summe der in der gesamten Formmasse enthaltenen Komponenten A und gegebenenfalls B und/oder C ergibt 100 Gew.-%.

Bevorzugt ist eine erfindungsgemäße Formmasse enthaltend oder bestehend aus den Komponenten A, B und C.

Weiterhin bevorzugt enthält die erfindungsgemäß eingesetzte Formmasse im Wesentlichen amorphe Polymere, d.h. d.h. mindestens die Hälfte (mindestens 50 Gew.%) der in der Formmasse enthaltenen Polymere sind amorphe Polymere.

### Polymermischung A

Bevorzugt beträgt in der Polymermischung A der Anteil des Polymers a 40 bis 90 Gew.-% und der Anteil des Schlagzähmodifikators b 60 bis 10 Gew.-%. Besonders bevorzugt beträgt in der Polymermischung A der Anteil des Polymers a 50 bis 80 Gew.-% und der Anteil des Schlagzähmodifikators b 50 bis 20 Gew.-%. Ganz besonders bevorzugt beträgt in der Polymermischung A der Anteil des Polymers a 60 bis 75 Gew.-% und der Anteil des Schlagzähmodifikators b 40 bis 25 Gew.-%.

Gemäß einer weiteren bevorzugten Ausführungsform, insbesondere für den 3D Druck mit einer hohen Extrusionsgeschwindigkeit, beträgt in der Polymermischung A bevorzugt der Anteil des Polymers a 75 bis 95 Gew.-% und der Anteil des Schlagzähmodifikators b 5 bis 25 Gew.-%; besonders bevorzugt beträgt in der Polymermischung A der Anteil des Polymers a 80 bis 90 Gew.-% und der Anteil des Schlagzähmodifikators b 10 bis 20 Gew.-%. Bei dieser Ausführungsform kann der Anteil des Polymers a in der Polymermischung A auch 100 Gew.-% betragen.

Unter einer hohen Extrusionsgeschwindigkeit ist im Sinne der vorliegenden Erfindung zu verstehen, dass Filamente aus der erfindungsgemäßen Formmasse gemäß der vorgenannten Ausführungsform in einem 3D-Drucker mit einer Heizdüse, die einen Durchmesser von 0,3 bis 0,8 mm, bevorzugt 0,35 bis 0,45 mm, besonders bevorzugt 0,4 mm, aufweist, bei einer Düsentemperatur von 200 bis 270°C, bevorzugt 230 bis 250°C, ganz bevorzugt 240°C aufgeschmolzen werden und die aufgeschmolzene Formmasse mit einer Geschwindigkeit von 60 bis 180 mm/s, bevorzugt 80 bis 160 mm/s, besonders bevorzugt 100 bis 140 mm/s, extrudiert wird.
Bei dem vorgenannten 3D-Drucker handelt es sich insbesondere um einen für das Fused Deposition Modeling-(FDM)-Verfahren geeigneten 3D-Drucker.

Das FDM-Verfahren ist ein Schmelzschichtungsverfahren bei dem Filamente aus einer für den 3D-Druck geeigneten Formmasse durch Erwärmung in dem 3D-Drucker verflüssigt werden, danach die verflüssigte Formmasse durch Extrudieren mit einer in der Fertigungsebene frei beweglichen Heizdüse schichtweise auf eine bewegliche Bauplattform (Druckbett) oder eine vorhergehende Schicht der Formmasse aufgetragen wird, und dann das geformte Material, gegebenenfalls durch Kühlung, verfestigt wird.

Gemäß einer weiteren bevorzugten Ausführungsform, insbesondere für den 3D-Druck in guter Druckqualität, beträgt in der Polymermischung A bevorzugt der Anteil des Polymers a 65 bis 95 Gew.-% und der Anteil des Schlagzähmodifikators b 5 bis 35 Gew.-%.

Besonders bevorzugt beträgt in der Polymermischung A der Anteil des Polymers a 70 bis 90 Gew.-% und der Anteil des Schlagzähmodifikators b 10 bis 30 Gew.-% und ganz besonders bevorzugt beträgt in der Polymermischung A der Anteil des Polymers a 75 bis 90 Gew.-% und der Anteil des Schlagzähmodifikators b 10 bis 25 Gew.-%.

Unter einer guten Druckqualität ist im Sinne der vorliegenden Erfindung zu verstehen, dass ein 3-dimensionaler Körper, der mit Hilfe des "Fused Deposition Molding" 3D-Druck-Verfahrens hergestellt bzw. gedruckt wurde, sich durch eine gute Betthaftung, kein Fadenziehen, Verzugsfreiheit, Dimensionsstabilität und eine große Kontaktfläche zwischen den Schichten (hohe Schichtenhaftung) auszeichnet.

Gemäß einer weiteren bevorzugten Ausführungsform, insbesondere zur Herstellung von Filamenten mit hoher Dimensionsstabilität für den 3D-Druck, beträgt in der Polymermischung A bevorzugt der Anteil des Polymers a 30 bis 60 Gew.-% und der Anteil des Schlagzähmodifikators b 40 bis 70 Gew.-%; besonders bevorzugt beträgt in der Polymermischung A der Anteil des Polymers a 40 bis 60 Gew.-% und der Anteil des Schlagzähmodifikators b 40 bis 60 Gew.-%; ganz besonders bevorzugt beträgt in der Polymermischung A der Anteil des Polymers a 50 bis 60 Gew.-% und der Anteil des Schlagzähmodifikators b 40 bis 50 Gew.-%.

Unter einer hohen Dimensionsstabilität eines Filaments für den 3D-Druck ist im Sinne der vorliegenden Erfindung zu verstehen, dass der erhaltene mittlere Durchmesser des Filaments von dem Soll-Durchmesser des Filaments maximal +/- 0,04 mm, bevorzugt maximal +/- 0,035 mm, besonders bevorzugt maximal +/- 0,025 mm abweicht und die Ovalität des Filaments < 0,03 mm, bevorzugt < 0,02 mm, ganz bevorzugt ≤ 0,01 mm ist. Als Soll-Durchmesser des Filaments wird vorzugsweise ein Durchmesser von 1,50 bis 3,20 mm ausgewählt, besonders bevorzugt beträgt er 1,70 bis 1,80 oder 2,80 bis 3,00, ganz besonders bevorzugt 1,75 bis 1,80 mm oder 2,85 bis 3,00.

Falls die erfindungsgemäße Formmasse als Additiv C keine oder nur geringe Mengen (0 bis 10 Gew.-%, bezogen auf die gesamte Formmasse) Mineralien wie faser- und pulverförmige Füll- und Verstärkungsmittel und/oder Pigmente enthält, beträgt in der Polymermischung A vorzugsweise der Anteil des Polymers a 70 bis 95 Gew.-% und der Anteil des Schlagzähmodifikators b 5 bis 30 Gew.-%.

### Polymer a

Das Polymer a bildet eine Hartphase mit einer Glasübergangstemperatur TG von > 20°C.

Die gewichtsmittleren Molmassen Mw der Polymere a betragen üblicherweise 150.000 bis 360.000 g/mol, bevorzugt 150.000 bis 300.000 g/mol, besonders bevorzugt 150.000 bis 270.000 g/mol, ganz besonders bevorzugt 150.000 bis 250.000 g/mol, insbesondere 150.000 bis 220.000 g/mol.

Als Polymer a werden erfindungsgemäß Vinylaromat-Copolymere, ausgewählt aus der Gruppe bestehend aus: Styrol-Acrylnitril-Copolymeren, α-Methylstyrol-Acrylnitril-Copolymeren, Styrol-Maleinsäureanhydrid-Copolymeren, Styrol-Phenylmaleinimid-Copolymeren, Styrol-Methylmethacrylat-Copolymeren, Styrol-Acrylnitril-Maleinsäureanhydrid-Copolymeren, Styrol-Acrylnitril-Phenylmaleinimid-Copolymeren, α-Methylstyrol-Acrylnitril-Methylmethacrylat-Copolymeren, α-Methylstyrol-Acrylnitril-t-Butylmethacrylat-Copolymeren, Styrol-Acrylnitril-t-Butylmethacrylat-Copolymeren, eingesetzt.

Weiterhin erfindungsgemäß geeignet als Polymer a sind auch Styrol-Acrylnitril-Copolymere und/oder α-Methylstyrol-Acrylnitril-Copolymere, die Methylacrylat, Ethylacrylat oder n-Butylacrylat als weiteres Comonomer enthalten.

Bei den vorgenannten Polymeren a handelt es sich vorzugsweise um amorphe Polymere. Bevorzugt verwendet werden als Polymer a Styrol-Acrylnitril-Copolymere (SAN), Styrol-Methylmethacrylat-Copolymere (SMMA) und/oder Styrol-Maleinsäureanhydrid-Copolymere (SMSA). Besonders bevorzugt sind Styrol-Acrylnitril-Copolymere.

Erfindungsgemäß als Polymer a eingesetzte SAN-Copolymere und α-Methylstyrol-Acrylnitril-Copolymere (AMSAN) enthalten im Allgemeinen 18 bis 35 Gew.-%, bevorzugt 20 bis 32 Gew.-%, besonders bevorzugt 22 bis 30 Gew.-% Acrylnitril (AN), und 82 bis 65 Gew.-%, bevorzugt 80 bis 68 Gew.-%, besonders bevorzugt 78 bis 70 Gew.-% Styrol (S) bzw. α-Methylstyrol (AMS), wobei die Summe aus Styrol bzw. α-Methylstyrol und Acrylnitril 100 Gew.-% ergibt.

Die eingesetzten SAN und AMSAN-Copolymere weisen im Allgemeinen eine mittlere Molmasse Mw von 150.000 bis 350.000 g/mol, bevorzugt 150.000 bis 300.000 g/mol, besonders bevorzugt 150.000 bis 250.000 g/mol, und ganz besonders bevorzugt 150.000 bis 200.000 g/mol auf.

Erfindungsgemäß als Polymer a eingesetzte SMMA-Copolymere enthalten im Allgemeinen 18 bis 50 Gew.-%, bevorzugt 20 bis 30 Gew.-% Methylmethacrylat (MMA), und 50 bis 82 Gew.-%, bevorzugt 80 bis 70 Gew.-% Styrol, wobei die Summe aus Styrol und MMA 100 Gew.-% ergibt.

Erfindungsgemäß als Polymer a eingesetzte SMSA-Copolymere enthalten im Allgemeinen 10 bis 40 Gew.-%, bevorzugt 20 bis 30 Gew.-% Maleinsäureanhydrid (MSA), und 60 bis 90 Gew.-%, bevorzugt 80 bis 70 Gew.-% Styrol, wobei die Summe aus Styrol und MSA 100 Gew.-% ergibt.

Das Polymer a hat eine Viskositätszahl VZ (ermittelt nach DIN 53 726 bei 25°C, an einer 0,5 Gew.-%igen Lösung des Polymers a in Dimethylformamid) von 50 bis 120, bevorzugt 52 bis 100 und besonders bevorzugt 55 bis 80 ml/g. Die Polymere a werden in bekannter Weise durch Masse-, Lösungs-, Suspensions-, Fällungs- oder Emulsionspolymerisation erhalten, wobei Masse- und Lösungspolymerisation bevorzugt sind. Einzelheiten dieser Verfahren sind z. B. im Kunststoffhandbuch, Hrg. R. Vieweg und G. Daumiller, Bd. 4 "Polystyrol", Carl-Hanser-Verlag München 1996, S. 104 ff sowie in "Modern Styrenic Polymers: Polystyrenes and Styrenic Copolymers" (Eds., J. Scheirs, D. Priddy, Wiley, Chichester, UK, (2003), Seiten 27 bis 29) und in GB-A 1472195 beschrieben.

Als SAN-Copolymere geeignet sind handelsübliche SAN-Copolymere wie beispielsweise Luran^{®} von der Firma Styrolution. Bevorzugt werden SAN-Copolymere mit einem S/AN-Verhältnis (in Gewichtsprozent) von 81/19 bis 67/33 und einem MVR (gemessen nach ISO 1133 bei 220°C und 10 kg Last) von mindestens 10 ml/10 min wie beispielsweise Luran 368 eingesetzt. Weiterhin bevorzugt werden SAN-Copolymere mit einem S/AN-Verhältnis (in Gewichtsprozent) von 81/19 bis 65/35 und einem MVR (gemessen nach ISO 1133 bei 220°C und 10 kg Last) von mindestens 8 ml/10 min wie beispielsweise Luran M60, Luran VLL1970, Luran 25100, Luran VLP und Luran VLR eingesetzt; besonders bevorzugt sind unter den vorgenannten SAN-Copolymeren solche mit einem MVR von mindestens 10 ml/10 min.

### Schlagzähmodifikator b

Der erfindungsgemäß eingesetzte Schlagzähmodifikator b bildet eine Weichphase mit einer Glasübergangstemperatur TG von < 0°C, vorzugsweise < -20°C, besonders bevorzugt < -40°C.

Die Teilchengröße der erfindungsgemäß eingesetzten Schlagzähmodifikatoren b beträgt im Allgemeinen mindestens 50 nm und höchstens 10 µm, bevorzugt 60 nm bis 5 µm, besonders bevorzugt 80 nm bis 3 µm, ganz besonders bevorzugt 80 nm bis 2 µm. Dabei bezieht sich die Teilchengröße auf den mittleren Teilchendurchmesser d₅₀.

Die Bestimmung des mittleren Teilchendurchmessers d₅₀ kann durch Ultrazentrifugenmessung ermittelt werden (vgl. W. Scholtan, H. Lange : Kolloid Z. u. Z. Polymere 250, S. 782 bis 796 (1972)).

Gemäß einer besonderen Ausführungsform werden Schlagzähmodifikatoren b mit bi-, tri- oder multimodalen Teilchengrößenverteilungen eingesetzt.

Erfindungsgemäß wird mindestens ein Schlagzähmodifikator b eingesetzt mit
b1: 20 bis 90 Gew.-%, bevorzugt 40 bis 90 Gew.-%, besonders bevorzugt 45 bis 85 Gew.-%, ganz besonders bevorzugt 50 bis 80 Gew.-%, einer Pfropfgrundlage eines oder mehrerer Monomere, bestehend aus:
   b11: 70 bis 100 Gew.-%, bevorzugt 75 bis 100 Gew.-%, besonders bevorzugt 80 bis 100 Gew.-%, mindestens eines konjugierten Diens, insbesondere Butadien, und/oder mindestens eines Acrylats, insbesondere n-Butylacrylat und/oder 2-Ethylhexylacrylat,
   b12: 0 bis 30 Gew.-%, bevorzugt 0 bis 25 Gew.-%, besonders bevorzugt 0 bis 20 Gew.-%, mindestens eines weiteren Comonomers ausgewählt aus: Styrol, α-Methylstyrol, Acrylnitril, Methacrylnitril, MMA, MSA und N-Phenylmaleinimid (N-PMI), bevorzugt Styrol und α-Methylstyrol, besonders bevorzugt Styrol;
   b13: 0 bis 10 Gew.-%, bevorzugt 0,01 bis 5, besonders bevorzugt 0,02 bis 2 Gew.-%, eines oder mehrerer polyfunktioneller, vernetzender Monomere, die, falls Komponente b11 Acrylat ist, in Mengen von mindestens 0.1 Gew % enthalten sein sollen,
b2: 10 bis 80 Gew.-%, bevorzugt 10 bis 60, besonders bevorzugt 15 bis 55 Gew.-%, ganz besonders bevorzugt 20 bis 50 Gew.-%, einer Pfropfauflage eines oder mehrerer Monomere, bestehend aus:
   b21: 65 bis 95 Gew.-%, bevorzugt 70 bis 90 Gew.-%, insbesondere 72,5 bis 85 Gew.-%, oftmals besonders bevorzugt 75 bis 85 Gew.% mindestens eines vinylaromatischen Monomeren, vorzugsweise Styrol und/oder α-Methylstyrol, insbesondere Styrol;
   b22: 5 bis 35 Gew.-%, bevorzugt 10 bis 30 Gew.%, insbesondere 15 bis 27,5 Gew.-%, oftmals besonders bevorzugt 15 bis 25 Gew.-% Acrylnitril und/oder Methacrylnitril, vorzugsweise Acrylnitril,
   b23: 0 bis 30 Gew.-%, bevorzugt 0 bis 20 Gew.-%, besonders bevorzugt 0 bis 15 Gew.-% mindestens eines weiteren monoethylenisch ungesättigten Monomeren ausgewählt aus: MMA, MSA und N-PMI, vorzugsweise MMA.

Bei den vorgenannten Schlagzähmodifikatoren b handelt es sich vorzugsweise um Acrylnitril-Butadien-Styrol-(ABS)- und/oder Acrylnitril-Styrol-Acrylat-(ASA)-Schlagzähmodifikatoren.

Der erfindungsgemäß eingesetzte Schlagzähmodifikator b ist besonders bevorzugt ein ABS-Schlagzähmodifikator b mit
b1: 40 bis 90 Gew.-% einer Pfropfgrundlage bestehend aus:
   b11: 70 bis 100 Gew.-%, bevorzugt 90 bis 100 Gew.-%, oftmals bevorzugt 90 bis 99,9 Gew.-%, oftmals weiterhin bevorzugt 90 bis 99 Gew.-% Butadien,
   b12: 0 bis 30 Gew.-%, bevorzugt 0 bis 10 Gew.-%, oftmals bevorzugt 0,1 bis 10 Gew.-%, oftmals weiterhin bevorzugt 1 bis 10 Gew.-%, Styrol und
b2: 10 bis 60 Gew.-% einer Pfropfauflage bestehend aus:
   b21: 65 bis 95 Gew.-%, bevorzugt 70 bis 90 Gew.-%, insbesondere 72,5 bis 85 Gew.-% Styrol,
   b22: 5 bis 35 Gew.-%, bevorzugt 10 bis 30 Gew.-%, insbesondere 15 bis 27,5 Gew.-% Acrylnitril und
   b23: 0 bis 30 Gew.-% MMA.

Bei den Acrylatkautschuken b1 handelt es sich i.a. um Alkylacrylat-Kautschuke aus einem oder mehreren C4-C8-Alkylacrylaten, wobei bevorzugt mindestens teilweise Butyl-, Hexyl-, Octyl- oder 2-Ethylhexylacrylat verwendet werden. Diese Alkylacrylat-Kautschuke können bis zu 30 Gew.-% harte Polymere bildende Monomere wie Styrol, α-Methylstyrol, Acrylnitril, Methacrylnitril, MMA, MSA und N-Phenylmaleinimid einpolymerisiert enthalten.

Bevorzugt sind Acrylnitril-Styrol-Acrylatkautschuke (ASA). Die Acrylatkautschuke enthalten weiterhin bis zu 10 Gew.-%, vorzugsweise 1 bis 5 Gew.-% an vernetzend wirkenden, polyfunktionellen Monomeren b13 (Vernetzungsmonomere). Beispiele hierfür sind Monomere, die zwei oder mehr zur Copolymerisation befähigte Doppelbindungen enthalten wie Ethylenglykoldiacrylat, Butandioldiacrylat, Hexandioldiacrylat, Ethylenglykoldimethacrylat, Butandioldimethacrylat, Hexandioldimethacrylat, Divinylbenzol, Diallylmaleat, Diallylfumarat, Diallylphthalat, Diallylcyanurat, Tris-allyl-cyanurat, Ester des Tricyclodecenylalkohols wie Tricyclodecenylacrylat, Dihydrodicyclopentadienylacrylat, Diallylphosphat, Allylacrylat, Allylmethacrylat und Dicyclopentadienylacrylat (DCPA). Bevorzugt werden Ester des Tricyclodecenylalkohols, Divinylbenzol, Allyl(meth)acrylat und/oder Tris-allyl-cyanurat eingesetzt.

Als konjugierte Diene b11 kommen Diene mit 4 bis 8 Kohlenstoffatomen wie Butadien, Isopren, Piperylen und Chloropren oder deren Mischungen in Betracht. Bevorzugt verwendet man Butadien oder Isopren oder deren Mischungen, ganz besonders bevorzugt Butadien.

Dien-Kautschuke b1 sind beispielsweise Homopolymere der vorgenannten konjugierten Diene b11, Copolymere solcher Diene b11 untereinander, Copolymere solcher Diene mit Acrylaten b11, insbesondere n-Butylacrylat, und Copolymere solcher Diene mit den Comonomeren b12 ausgewählt aus Styrol, α-Methylstyrol, Acrylnitril, Methacrylnitril Methylmethacrylat (MMA), Maleinsäureanhydrid (MSA) und N-Phenylmaleinimid (N-PMI). Die Dien-Kautschuke können auch vernetzend wirkende, polyfunktionelle Monomere b13 wie vorstehend für die Acrylatkautschuke b1 genannt enthalten.

Bevorzugte Dien-Kautschuke sind handelsübliche Butadien-, Butadien-Styrol-, Butadien-Methylmethacrylat-, Butadien-n-Butylacrylat-, Butadien-Acrylnitril- und Acrylnitril-Butadien-Styrol-Kautschuke (ABS); besonders bevorzugt sind ABS-Kautschuke; ganz besonders bevorzugt wird als Dien-Kautschuk b1 ein Butadien-Kautschuk eingesetzt.

Derartige bevorzugte Dien-Kautschuke b1 und ABS-Schlagzähmodifikatoren b werden in der EP 0 993 476 B1 beschrieben. Besonders bevorzugte Dien-Kautschuke b1 und ABS-Schlagzähmodifikatoren b werden in der Druckschrift WO 01/62848 beschrieben.

Bei der Weichkomponente handelt es sich bevorzugt um ein mehrstufig aufgebautes Copolymer (sog. "Kern/Schale-Aufbau", "core/shell morphology"). Beispielsweise kann ein kautschukelastischer Kern (Glastemperatur TG <50°C) von einer "harten" Schale (Polymere mit TG >50°C) oder umgekehrt umhüllt sein. Derartige Kern-Schale-Pfropfcopolymere sind bekannt.

Verfahren zur Herstellung der Schlagzähmodifikatoren b sind dem Fachmann bekannt und in der Literatur beschrieben. Entsprechende Produkte sind zum Teil kommerziell erhältlich. Als besonders vorteilhaft hat sich die Herstellung durch Emulsionspolymerisation erwiesen (DE-C 12 60 135 , EP 0 993 476 B1 und WO 01/01489).

Üblicherweise polymerisiert man bei 20 bis 100°C, bevorzugt 30 bis 80°C. In der Regel werden übliche Emulgatoren mitverwendet, beispielsweise Alkalimetallsalze von Alkyl- oder Alkylarylsulfonsäuren, Alkylsulfate, Fettalkoholsulfonate, Salze höherer Fettsäuren mit 10 bis 30 Kohlenstoffatomen, Sulfosuccinate, Ethersulfonate oder Harzseifen. Vorzugsweise nimmt man die Alkalimetallsalze, insbesondere die Na- und K-Salze, von Alkylsulfonaten oder Fettsäuren mit 10 bis 18 Kohlenstoffatomen.

In der Regel werden die Emulgatoren in Mengen von 0,5 bis 5 Gew.-%, insbesondere von 0,5 bis 3 Gew.-%, bezogen auf die bei der Herstellung der Pfropfgrundlage b1 eingesetzten Monomeren, eingesetzt.

Vorzugsweise verwendet man zur Herstellung der Dispersion soviel Wasser, dass die fertige Dispersion einen Feststoffgehalt von 20 bis 50 Gew.-% hat. Üblicherweise wird bei einem Wasser/Monomeren-Verhältnis von 2 : 1 bis 0,7 : 1 gearbeitet.

Zum Starten der Polymerisationsreaktion sind alle Radikalbildner geeignet, die bei der gewählten Reaktionstemperatur zerfallen, also sowohl solche, die allein thermisch zerfallen, als auch solche, die dies in Gegenwart eines Redox-Systems tun. Als Polymerisationsinitiatoren kommen vorzugsweise Radikalbildner, beispielsweise Peroxide wie bevorzugt Peroxosulfate (etwa Natrium- oder Kaliumpersulfat) und Azoverbindungen wie Azodiisobutyronitril in Betracht. Es können jedoch auch Redox-Systeme, insbesondere solche auf Basis von Hydroperoxiden wie Cumolhydroperoxid, eingesetzt werden.

In der Regel werden die Polymerisationsinitiatoren in einer Menge von 0,1 bis 1 Gew.-%, bezogen auf die Pfropfgrundlage-Monomeren a11) und a12), eingesetzt.

Die Radikalbildner und auch die Emulgatoren werden dem Reaktionsansatz beispielsweise diskontinuierlich als Gesamtmenge zu Beginn der Reaktion, oder aufgeteilt in mehrere Portionen absatzweise zu Beginn und zu einem oder mehreren späteren Zeitpunkten zugefügt, oder kontinuierlich während eines bestimmten Zeitintervalls zugefügt. Die kontinuierliche Zugabe kann auch entlang eines Gradienten erfolgen, der z. B. auf- oder absteigend, linear oder exponentiell, oder auch stufenweise (Treppenfunktion) sein kann.

Ferner kann man Molekulargewichtsregler wie z. B. Ethylhexylthioglycolat, n- oder t-Dodecylmercaptan oder andere Mercaptane, Terpinole und dimeres alpha - Methylstyrol oder andere, zur Regelung des Molekulargewichts geeigneten Verbindungen, mitverwenden. Die Molekulargewichtsregler werden dem Reaktionsansatz diskontinuierlich oder kontinuierlich zugefügt, wie dies für die Radikalbildner und Emulgatoren zuvor beschrieben wurde.

Zur Einhaltung eines konstant bleibenden pH-Wertes, der vorzugsweise bei 6 bis 9 liegt, kann man Puffersubstanzen wie Na₂HPO₄/NaH₂PO₄, Natriumhydrogencarbonat oder Puffer auf Basis Citronensäure/Citrat, mitverwenden. Regler und Puffersubstanzen werden in den üblichen Mengen eingesetzt, so dass sich nähere Angaben hierzu erübrigen.

In einer besonderen bevorzugten Ausführungsform fügt man während der Pfropfung der Pfropfgrundlage b1 mit den Monomeren b21) bis b23) ein Reduktionsmittel zu.

Man kann die Pfropfgrundlage b1 in einer besonderen Ausführungsform auch durch Polymerisation der Monomeren b11) bis b13) in Gegenwart eines feinteiligen Latex herstellen (sog. "Saatlatex-Fahrweise" der Polymerisation). Dieser Latex wird vorgelegt und kann aus kautschukelastische Polymere bildenden Monomeren, oder auch aus anderen Monomeren, wie sie bereits genannt wurden, bestehen. Geeignete Saatlatices bestehen beispielsweise aus Polybutadien oder Polystyrol.

Bei der Saatpolymerisationstechnik wird üblicherweise zunächst ein feinteiliges Polymer, vorzugsweise ein Polybutadien, als Saatlatex hergestellt und dann durch Weiterumsatz mit Butadien enthaltenden Monomeren zu größeren Teilchen weiterpolymerisiert wird (siehe z. B. in Houben Weyl, Methoden der Organischen Chemie, Makromolekulare Stoffe Teil 1, S. 339 (1961), Thieme Verlag Stuttgart). Dabei wird vorzugsweise unter Verwendung des Saat-Batch-Verfahrens oder Verwendung des Saat-ZulaufVerfahrens gearbeitet.

Durch den Einsatz von - insbesondere Polybutadien - Saatlatices mit einem mittleren Teilchendurchmesser d₅₀ von 25 bis 200 nm, vorzugsweise von 30 bis 180 nm und besonders bevorzugt von 60 bis 170 nm, lassen sich Polybutadienlatices b1 mit einem mittleren Teilchendurchmesser d₅₀ von 200 bis 600 nm, vorzugsweise 230 bis 480 nm, besonders bevorzugt von 240 bis 470 nm, ganz besonders bevorzugt von 250 bis 460 nm, erhalten.

Bei Verwendung von Saatlatices mit mittleren Teilchendurchmessern d₅₀ oberhalb 80 nm, vorzugsweise oberhalb 90 nm und besonders bevorzugt oberhalb 100 nm werden auch die Saatlatices selbst vorzugsweise durch Saatpolymerisation hergestellt. Dazu werden vorzugsweise Saatlatices mit mittleren Teilchendurchmessern d₅₀ von 10 bis 60 nm, vorzugsweise 20 bis 50 nm, eingesetzt.

Bevorzugte Pfropfgrundlagen b1 und Pfropfcopolymere bzw. Schlagzähmodifkatoren b können durch die in dem Dokument WO 01/62848A1 beschriebene Saatpolymerisationstechnik erhalten werden.

In einer anderen bevorzugten Ausführungsform kann man die Pfropfgrundlage b1 im sogenannten Zulaufverfahren herstellen. Bei diesem Verfahren wird ein bestimmter Anteil der Monomeren b11) bis b13) vorgelegt und die Polymerisation gestartet, wonach man den Rest der Monomeren b11) bis b13) ("Zulaufanteil") als Zulauf während der Polymerisation zufügt.

Die Zulaufparameter (Gestalt des Gradienten, Menge, Dauer, etc.) hängen von den anderen Polymerisationsbedingungen ab. Sinngemäß gelten auch hier die zur Zugabeweise des Radikalstartes bzw. Emulgators gemachten Ausführungen. Bevorzugt beträgt beim Zulaufverfahren der vorgelegte Anteil der Monomeren a1) 5 bis 50, besonders bevorzugt 8 bis 40 Gew.-%, bezogen auf b1. Bevorzugt lässt man den Zulaufanteil von b11) bis b13) innerhalb 1-18 Stunden, insbesondere 2-16 Stunden, ganz besonders 4 bis 12 Stunden, zulaufen.

Weiterhin eigenen sich auch Pfropfpolymere mit mehreren "weichen" und "harten" Schalen, z. B. des Aufbaus b1) -b2) -b1) -b2), oder b2) -b1) -b2), vor allem im Falle größerer Teilchen.

Die genauen Polymerisationsbedingungen, insbesondere Art, Menge und Dosierung des Emulgators und der anderen Polymerisationshilfsstoffe werden bevorzugt so gewählt, dass der erhaltene Latex des Pfropfcopolymeren, d.h. des Schlagzähmodifikators b, eine mittlere Teilchengrösse, definiert durch den d₅₀-Wert der Teilchengrößenverteilung, von 80 bis 1000 nm, bevorzugt 85 bis 600 nm und besonders bevorzugt 90 bis 500 nm aufweist.

Man stimmt die Reaktionsbedingungen so aufeinander ab, dass die Polymerteilchen eine bimodale Teilchengrößenverteilung aufweisen, also eine Größenverteilung mit zwei mehr oder weniger ausgeprägten Maxima. Das erste Maximum ist deutlicher ausgeprägt (vergleichsweise schmaler Peak) als das zweite und liegt in der Regel bei 25 bis 200 nm, bevorzugt 60 bis 170 nm, besonders bevorzugt 70 bis 150 nm. Das zweite Maximum ist vergleichsweise breit und liegt in der Regel bei 150 bis 800 nm, bevorzugt 180 bis 700 nm, besonders bevorzugt 200 bis 600 nm.

Dabei liegt das zweite Maximum (150 bis 800 nm) bei größeren Teilchengrößen als das erste Maximum (25 bis 200 nm).

Gemäß einer bevorzugten Ausführungsform einer bimodalen Teilchengrößenverteilung liegt das erste Maximum (b1') der Pfropfgrundlage b1 bei einer mittleren Teilchengröße d₅₀ von 25 bis 200 nm, bevorzugt 30 bis 180 nm, besonders bevorzugt 60 bis 170 nm, und das zweite Maximum (b1 ") der Pfropfgrundlage b1 bei einer mittleren Teilchengröße d₅₀ von 230 bis 480 nm, ganz besonders bevorzugt 240 bis 470 nm, ganz besonders bevorzugt 250 bis 460 nm.

Gemäß einer besonders bevorzugten Ausführungsform ist die Teilchengrößenverteilung der Pfropfgrundlage b1 trimodal: das erste Maximum (b1') der Pfropfgrundlage b1 liegt bei einer mittleren Teilchengröße d₅₀ von 25 bis 200 nm, bevorzugt 30 bis 180 nm, besonders bevorzugt 60 bis 170 nm, und das zweite Maximum (b1 ") der Pfropfgrundlage b1 bei einem mittleren Teilchendurchmesser d₅₀ von 230 bis 330 nm, vorzugsweise von 240 bis 320 nm und besonders bevorzugt von 250 bis 310 nm, und das dritte Maximum (b1"') besitzt einen mittleren Teilchendurchmesser d₅₀ von 340 bis 480 nm, vorzugsweise von 350 bis 470 nm und besonders bevorzugt von 360 bis 460 nm.

Bevorzugt wird die bimodale Teilchengrößenverteilung durch eine (teilweise) Agglomeration der Polymerteilchen erzielt. Dazu kann beispielsweise wie folgt vorgegangen werden: Man polymerisiert die Monomeren b11) bis b13), welche den Kern aufbauen, bis zu einem Umsatz von üblicherweise mindestens 90, bevorzugt grösser 95%, bezogen auf die eingesetzten Monomeren. Dieser Umsatz ist in der Regel nach 4 bis 20 Stunden erreicht. Der erhaltene Kautschuklatex hat eine mittlere Teilchengrösse d₅₀ von maximal 200 nm und eine enge Teilchengrössenverteilung (nahezu monodisperses System).

In der zweiten Stufe wird der Kautschuklatex agglomeriert. Dies geschieht in der Regel durch Zugabe einer Dispersion eines Acrylesterpolymers. Vorzugsweise werden Dispersionen von Copolymeren von (C1-C4-Alkyl)estern der Acrylsäure, vorzugsweise von Ethylacrylat, mit 0,1 bis 10 Gew.-% polare Polymere bildenden Monomeren, wie z. B. Acrylsäure, Methacrylsäure, Acrylamid oder Methacrylamid, N-Methylolmethacrylamid oder N-Vinylpyrrolidon, eingesetzt. Besonders bevorzugt ist ein Copolymer aus 96% Ethylacrylat und 4% Methacrylamid. Die Agglomerierdispersion kann gegebenenfalls auch mehrere der genannten Acrylesterpolymerisate enthalten.

Die Konzentration der Acrylesterpolymerisate in der zur Agglomeration verwendeten Dispersion soll im Allgemeinen zwischen 3 und 40 Gew.-% liegen. Bei der Agglomeration werden 0,2 bis 20, vorzugsweise 1 bis 5 Gew.-Teile der Agglomerierdispersion auf 100 Teile des Kautschuklatex, jeweils berechnet auf Feststoffe, eingesetzt. Die Agglomeration wird durch Zugabe der Agglomerierdispersion zum Kautschuk durchgeführt. Die Geschwindigkeit der Zugabe ist normalerweise nicht kritisch, im Allgemeinen dauert sie etwa 1 bis 30 Minuten bei einer Temperatur zwischen 20 und 90°C, vorzugsweise zwischen 30 und 75°C.

Außer mittels einer Acrylesterpolymer-Dispersion kann der Kautschuklatex auch durch andere Agglomeriermittel wie z. B. Essigsäureanhydrid, agglomeriert werden. Auch eine Agglomeration durch Druck oder Einfrieren (Druck- bzw. Gefrieragglomeration) ist möglich. Die genannten Methoden sind dem Fachmann bekannt.

Unter den genannten Bedingungen wird nur ein Teil der Kautschukteilchen agglomeriert, so dass eine bimodale Verteilung entsteht. Dabei liegen nach der Agglomeration im Allgemeinen mehr als 50, vorzugsweise zwischen 75 und 95% der Teilchen (Zahlen-Verteilung) im nicht agglomerierten Zustand vor. Der erhaltene teilagglomerierte Kautschuklatex ist verhältnismäßig stabil, so dass er ohne weiteres gelagert und transportiert werden kann, ohne dass Koagulation eintritt.

Um eine bimodale Teilchengrössenverteilung des Pfropfcopolymers b zu erzielen, ist es auch möglich, zwei verschiedene Pfropfpolymerisate b' und b", die sich in ihrer mittleren Teilchengröße unterscheiden, getrennt voneinander in üblicher Weise herzustellen und die Pfropfcopolymere b' und b" im gewünschten Mengenverhältnis zusammenzugeben. Diese Variante ist erfindungsgemäß bevorzugt.

Um eine trimodale Teilchengrössenverteilung des Pfropfcopolymers b zu erzielen, ist es auch möglich, zwei verschiedene Pfropfgrundlagen b1' und b1 ", die sich in ihrer mittleren Teilchengröße unterscheiden, getrennt voneinander in üblicher Weise herzustellen, die Pfropfgrundlagen vor der Pfropfung (oder gegebenfalls auch danach) im gewünschten Verhältnis zusammenzubringen und dann die Propfauflage aufzupropfen und danach zu den so erhaltenen Pfropfcopolymeren b' und b" ein drittes, getrennt hergestelltes, Pfropfcopolymer b"', das sich von b' und b" in seiner mittleren Teilchengröße unterscheidet, im gewünschten Mengenverhältnis hinzuzufügen.
Bevorzugt ist das vorgenannte Pfropfcopolymer b eine Mischung verschiedener ABS-Pfropfpolymere b' und b" oder bevorzugt b', b" und b"'.

Im Falle einer bimodalen Teilchengrößenverteilung ist der Schlagzähmodifikator bevorzugt eine Mischung von ABS-Pfropfcopolymeren b' und b", wobei die Pfropfgrundlage b1' des ABS-Pfropfcopolymers b' üblicherweise eine mittlere Teilchengröße d₅₀ von 25 bis 200 nm, bevorzugt 30 bis 180 nm, besonders bevorzugt 60 bis 170 nm aufweist und die Pfropfgrundlage b1" des ABS-Pfropfcopolymers b" eine mittlere Teilchengröße d₅₀ von 230 bis 480 nm, ganz besonders bevorzugt 240 bis 470 nm, ganz besonders bevorzugt 250 bis 460 nm besitzt.

Besonders bevorzugt weist der Schlagzähmodifikator b eine trimodale Teilchengrößenverteilung auf und ist eine Mischung von ABS-Pfropfcopolymeren b', b" und b"', wobei die Pfropfgrundlage b1' des ABS-Pfropfcopolymers b' eine mittlere Teilchendurchmesser d₅₀ von 25 bis 200 nm, bevorzugt 30 bis 180 nm, besonders bevorzugt 60 bis 170 nm aufweist, die Pfropfgrundlage b1 "des ABS-Pfropfcopolymers b" einen mittleren Teilchendurchmesser d₅₀ von 230 bis 330 nm, vorzugsweise von 240 bis 320 nm und besonders bevorzugt von 250 bis 310 nm aufweist und die Pfropfgrundlage b1"' des ABS-Pfropfcopolymers b"'einen mittleren Teilchendurchmesser d₅₀ von 340 bis 480 nm, vorzugsweise von 350 bis 470 nm und besonders bevorzugt von 360 bis 460 nm besitzt.

Die Pfropfgrundlagen b1', b1" und b1"' sind vorzugsweise Butadien-Homopolymere und die jeweilige Pfropfauflage b2 ist vorzugsweise ein SAN-Copolymer.

Die Propfcopolymere b', b", b'" werden in einem Gewichtsverhältnis Propfcopolymer b' : Summe der Propfcopolymere b" und b'" von im Allgemeinen 75:25 bis 50:50, vorzugsweise 70:30 bis 55:45, besonders bevorzugt 65:35 bis 57:43, insbesondere 60:40 eingesetzt.

Besonders bevorzugt ist eine Mischung vorgenannter Pfropfcopolymere b' und b" oder b', b" und b"', deren jeweilige Pfropfgrundlage b1' und b1" bzw. b1', b1" und b1"' durch Saatpolymerisation hergestellt wurde.

Die Pfropfgrundlage b1" weist im Allgemeinen einen mittleren Teilchendurchmesser d₅₀ von 230 bis 330 nm, vorzugsweise von 240 bis 320 nm und besonders bevorzugt von 250 bis 310 nm auf.

Der Gelgehalt von b1" beträgt im Allgemeinen 30 bis 80 Gew.-%, vorzugsweise 40 bis 75 Gew.-% und besonders bevorzugt 45 bis 70 Gew.-%.

Die Pfropfgrundlage b1"' besitzt im Allgemeinen einen mittleren Teilchendurchmesser d₅₀ von 340 bis 480 nm, vorzugsweise von 350 bis 470 nm und besonders bevorzugt von 360 bis 460 nm.

Der Gelgehalt von b1"' beträgt im Allgemeinen 50 bis 95 Gew.-%, vorzugsweise 55 bis 90 Gew.-% und besonders bevorzugt 60 bis 85 Gew.-%.

Ganz besonders bevorzugt erfolgt die Saatpolymerisation der Pfropfgrundlage der Pfropfgrundlagen b1" und b1"' unter Verwendung von mindestens einem Polybutadiensaatlatex mit einem mittleren Teilchendurchmesser d₅₀ von 25 bis 200 nm, vorzugsweise von 30 bis 180 nm und besonders bevorzugt von 60 bis 170 nm.

Die Pfropfgrundlage b1' besitzt im Allgemeinen einen mittlere Teilchendurchmesser d₅₀ von 25 bis 200 nm, bevorzugt 30 bis 180 nm, besonders bevorzugt 60 bis 170 nm. Ganz besonders bevorzugt erfolgt die Saatpolymerisation der Pfropfgrundlage b1' unter Verwendung von mindestens einem Polybutadiensaatlatex mit einem mittleren Teilchendurchmesser d₅₀ von 10 bis 60 nm, vorzugsweise 20 bis 50 nm.

Der Gelgehalt der Pfropfgrundlage b1' beträgt 30 bis 98 Gew.-%, vorzugsweise 40 bis 95 Gew.-% und besonders bevorzugt 50 bis 92 Gew.-%.

Die Bestimmung des mittleren Teilchendurchmessers d₅₀ kann durch Ultrazentrifugenmessung ermittelt werden (vgl. W. Scholtan, H. Lange : Kolloid Z. u. Z. Polymere 250, S. 782 bis 796 (1972)); die angegebenen Werte für den Gelgehalt beziehen sich auf die Bestimmung nach der Drahtkäfigmethode in Toluol (vgl. Houben-Weyl, Methoden der Organischen Chemie, Makromolekulare Stoffe, Teil 1, S. 307 (1961), Thieme Verlag Stuttgart).

Die Gelgehalte können in prinzipiell bekannter Weise durch Anwendung geeigneter Reaktionsbedingungen eingestellt werden (z. B. hohe Reaktionstemperatur und/oder Polymerisation bis zu hohem Umsatz sowie gegebenenfalls Zusatz vernetzend wirkender Substanzen zur Erzielung eines hohen Gelgehaltes oder z. B. niedrige Reaktionstemperatur und/oder Abbruch der Polymerisationsreaktion vor Eintreten einer zu starken Vernetzung sowie gegebenenfalls Zusatz von Molekulargewichtsreglern zur Erzielung eines niedrigen Gelgehaltes).

Mischungen der vorgenannten erfindungsgemäß eingesetzten Propfcopolymere b', b" und b'" und die Herstellung derer Pfropfgrundlagen durch Saatpolymerisation werden in der WO 01/62848 A1 beschrieben.

Üblicherweise wird die Polymerisation der Pfropfgrundlage b1 durch Wahl der Reaktionsbedingungen so geführt, dass eine Pfropfgrundlage mit einem bestimmten Vernetzungszustand resultiert. Als hierfür wesentliche Parameter sind beispielhaft anzuführen die Reaktionstemperatur und -dauer, das Verhältnis von Monomeren, Regler, Radikalstarter und beispielsweise beim Zulaufverfahren, die Zulaufgeschwindigkeit und die Menge und der Zugabezeitpunkt von Regler und Initiator.

Eine Methode zur Charakterisierung des Vernetzungszustandes von vernetzten Polymerteilchen ist die Messung des Quellungsindex Ql, der ein Maß für die Quellbarkeit eines mehr oder weniger stark vernetzten Polymeren durch ein Lösemittel ist. Übliche Quellungsmittel sind beispielsweise Methyletylketon oder Toluol. Üblicherweise liegt der Ql der erfindungsgemäßen Formmassen im Bereich Ql = 10 bis 60, bevorzugt bei 15 bis 55 und besonders bevorzugt bei 20 bis 50.

Eine andere Methode zur Charakterisierung des Vernetzungszustandes ist die Messung von NMR-Relaxationszeiten der beweglichen Protonen, die sog. T2-Zeiten. Je stärker vernetzt ein bestimmtes Netzwerk ist, desto niedriger liegen seine T2-Zeiten. Übliche T2-Zeiten für die erfindungsgemäßen Pfropfgrundlagen b1 sind T2-Zeiten im Bereich 2,0 bis 4,5 ms, bevorzugt 2,5 bis 4,0 ms und besonders bevorzugt 2,5 bis 3,8 ms, gemessen an verfilmten Proben bei 80°C.

Ein weiteres Maß für die Charakterisierung der Pfropfgrundlage und deren Vernetzungszustand ist der Gelgehalt, d. h. derjenige Produktanteil, der vernetzt und damit in einem bestimmten Lösemittel nicht löslich ist. Sinnvollerweise wird der Gelgehalt im gleichen Lösemittel wie der Quellungsindex bestimmt.
Übliche Gelgehalte der erfindungsgemäßen Pfropfgrundlagen b1 liegen im Bereich 50 bis 90%, bevorzugt 55 bis 85% und besonders bevorzugt 60 bis 80%.
Bei den erfindungsgemäß bevorzugt eingesetzten Mischungen von Pfropfgrundlagen b1', b1" und b1"' mit trimodaler Teilchengrößenverteilung liegen die einzelnen Gelgehalte in den weiter oben beschriebenen Bereichen.

Die Bestimmung des Quellungsindex geschieht beispielsweise nach folgendem Verfahren: ca. 0,2 g des Feststoffes einer durch Verdampfen des Wassers verfilmten Pfropfgrundlagendispersion werden in einer genügend großen Menge (z. B. 50 g) Toluol angequollen. Nach z. B. 24 h wird das Toluol abgesaugt und die Probe ausgewogen. Nach Trocknen der Probe im Vakuum wird erneut ausgewogen. Der Quellungsindex ist das Verhältnis der Auswaage nach dem Quellungsvorgang zu der Auswaage trocken nach der erneuten Trocknung. Dementsprechend errechnet sich der Gelanteil aus dem Verhältnis der Trockenauswaage nach dem Quellschritt zur Einwaage vor dem Quellschritt (x 100%).

Die Bestimmung der T2-Zeit geschieht durch Messen der NMR-Relaxation einer entwässerten und verfilmten Probe der Pfropfgrundlagendispersion. Hierzu wird beispielsweise die Probe nach Ablüften über Nacht bei z.B. 60°C 3 h im Vakuum getrocknet und dann mit einem geeigneten Messgerät, z. B. minispec-Gerät der Fa. Brucker, bei 80°C vermessen. Vergleichbar sind nur Proben, die nach der gleichen Methode vermessen wurden, da die Relaxation deutlich temperaturabhängig ist.

Die Herstellung der Pfropfauflage b2 kann unter den gleichen Bedingungen wie die Herstellung der Pfropfgrundlage b1 erfolgen, wobei man die Auflage b2 in einem oder mehreren Verfahrensschritten herstellen kann.

Beispielsweise kann man bei einer zweistufigen Pfropfung zunächst Styrol bzw. alpha-Methylstyrol alleine und danach Styrol und Acrylnitril in zwei aufeinander folgenden Schritten polymerisieren. Diese zweistufige Pfropfung (zunächst Styrol, dann Styrol/Acrylnitril) ist eine bevorzugte Ausführungsform. Weitere Einzelheiten zur Herstellung der Pfropfcopolymeren bzw. der Schlagzähmodifikatoren b, sind in den DE 12 60 135 und DE 31 49 358 beschrieben.

Es ist vorteilhaft, die Pfropfpolymerisation auf die Pfropfgrundlage b1 wiederum in wässriger Emulsion durchzuführen. Sie kann im gleichen System wie die Polymerisation der Pfropfgrundlage vorgenommen werden, wobei weiter Emulgator und Initiator zugegeben werden kann. Diese müssen mit den zur Herstellung der Pfropfgrundlage b1 verwendeten Emulgatoren bzw. Initiatoren nicht identisch sein. So kann z. B. zweckmässig sein, als Initiator für die Herstellung der Pfropfgrundlage b1 ein Persulfat zu verwenden, zur Polymerisation der Pfropfhülle b2 jedoch ein Redoxinitiator-System einzusetzen. Im Übrigen gilt für die Wahl von Emulgator, Initiator und Polymerisationshilfsstoffen das bei der Herstellung der Pfropfgrundlage b1 gesagte. Das aufzupfropfende Monomerengemisch kann dem Reaktionsgemisch auf einmal, absatzweise in mehreren Stufen oder vorzugsweise kontinuierlich während der Polymerisation zugegeben werden.

Soweit bei der Pfropfung der Pfropfgrundlage b1 nicht gepfropfte Polymere aus den Monomeren b21) bis b23) entstehen, werden die Mengen, die in der Regel unter 10 Gew.-% von b2 liegen, der Masse der Komponente b zugeordnet.

Gemäß einer weiteren bevorzugten Ausführungsform kann der Schlagzähmodifikator b durch Massepolymerisation wie beispielsweise in "Modern Styrenic Polymers: Polystyrenes and Styrenic Copolymers" (Eds., J. Scheirs, D. Priddy, Wiley, Chichester, UK, (2003), Seiten 29 und 305 ff) beschrieben hergestellt werden. Dabei werden Polymere b mit Teilchengrößen von im Allgemeinen 250 nm bis 10 µm, bevorzugt 300 nm bis 5 µm, besonders bevorzugt 400 nm bis 3 µm, ganz besonders bevorzugt 800 nm bis 3 µm erhalten.

Gemäß einer Ausführungsform, insbesondere für den 3D-Druck mit hoher Extrusionsgeschwindigkeit, bevorzugt ist eine erfindungsgemäße thermoplastische Formmasse enthaltend eine Polymermischung A aus den Komponenten a und b:
a: 75 bis 95 Gew.-%, bevorzugt 80 bis 90 Gew.-% mindestens eines Polymers a mit einer mittleren Molmasse Mw von 150.000 bis 360.000 g/mol, ausgewählt aus:
   Vinylaromat-Copolymeren ausgewählt aus der Gruppe bestehend aus: Styrol-Acrylnitril-Copolymeren, α-Methylstyrol-Acrylnitril-Copolymeren, Styrol-Acrylnitril-Maleinsäureanhydrid-Copolymeren, Styrol-Acrylnitril-Phenylmaleinimid-Copolymeren, α-Methylstyrol-Acrylnitril-Methylmethacrylat-Copolymeren, wobei die Styrol-Acrylnitril-Copolymere und α-Methylstyrol-Acrylnitril-Copolymere aus 18 bis 35 Gew.-% Acrylnitril und 82 bis 65 Gew.-% Styrol bzw. α-Methylstyrol bestehen,, und die Styrol-Acrylnitril-Maleinsäureanhydrid-Copolymere, Styrol-Acrylnitril-N-Phenylmaleinimid-Copolymere und α-Methylstyrol-Acrylnitril-Methylmethacrylat-Copolymere aus 18 bis 35 Gew.-% Acrylnitril, 67 bis 64,9 Gew.-% Styrol und 0,1 bis 15 Gew.-% Maleinsäureanhydrid, N-Phenylmaleinimid oder Methylmethacrylat bestehen;
b: 5 bis 25 Gew.-%, bevorzugt 10 bis 20 mindestens eines Schlagzähmodifikators b, mit
   b1: 20 bis 90 Gew.-% einer Pfropfgrundlage eines oder mehrerer Monomere, bestehend aus:
      b11: 70 bis 100 Gew.-% mindestens eines konjugierten Diens,
      b12: 0 bis 30 Gew.-% mindestens eines weiteren Comonomers ausgewählt aus: Styrol, α-Methylstyrol, Acrylnitril, Methacrylnitril, MMA, MSA und N-Phenylmaleinimid (N-PMI);
      b13: 0 bis 10 Gew.-% eines oder mehrerer polyfunktioneller, vernetzender Monomere,
   b2: 10 bis 80 Gew.-% einer Pfropfauflage eines oder mehrerer Monomere, bestehend aus:
      b21: 65 bis 95 Gew.-%, bevorzugt 70 bis 90 Gew.-%, insbesondere 72,5 bis 85 Gew.-%, oftmals besonders bevorzugt 75 bis 85 Gew.-%, mindestens eines vinylaromatischen Monomeren, vorzugsweise Styrol und/oder α-Methylstyrol, insbesondere Styrol;
      b22) 5 bis 35 Gew.-%, bevorzugt 10 bis 30 Gew.-%, insbesondere 15 bis 27,5 Gew.-%, oftmals besonders bevorzugt 15 bis 25 Gew.-% Acrylnitril und/oder Methacrylnitril, vorzugsweise Acrylnitril,
      b23) 0 bis 30 Gew.-%, bevorzugt 0 bis 20 Gew.-%, besonders bevorzugt 0 bis 15 Gew.-% mindestens eines weiteren monoethylenisch ungesättigten Monomeren ausgewählt aus: MMA, MSA und N-PMI;
wobei die Summe aus a und b 100 Gew.-% ergibt,
dadurch gekennzeichnet, dass die Viskosität (gemessen nach ISO 11443) der Formmasse bei Scherraten von 1 bis 10 1/s und bei Temperaturen von 250 °C nicht höher als 1x10⁵ Pa*s ist und die Melt Volume Rate (MVR, gemessen nach ISO 1133 bei 220°C und 10 kg Last) mehr als 6 ml/10 min beträgt.

Die in Gew.-% angegebenen Mengen der in dem Polymer a enthaltenen Comonomere addieren sich immer zu 100 Gew.-%. Die Summe der in Gew.-% angegebenen Mengen Komponenten b11, b12 und gegebenfalls b13, sowie sowie die Summe der in Gew.-% angegebenen Mengen der Komponenten b21, b22 und gegebenfalls b23 ergibt immer 100 Gew.-%.

Besonders bevorzugt gemäß der vorgenannten Ausführungsform, insbesondere für den 3D-Druck mit hoher Extrusionsgeschwindigkeit, ist eine erfindungsgemäße thermoplastische Formmasse enthaltend eine Polymermischung A aus den Komponenten a und b:
a: 75 bis 95 Gew.-%, bevorzugt 80 bis 90 Gew.-% mindestens eines Polymers a mit einer mittleren Molmasse Mw von 150.000 bis 360.000 g/mol, ausgewählt aus:
   Styrol-Acrylnitril-Copolymeren und α-Methylstyrol-Acrylnitril-Copolymeren, vorzugsweise Styrol-Acrylnitril-Copolymeren, bestehend aus: 18 bis 35 Gew.-% Acrylnitril und 82 bis 65 Gew.-% Styrol bzw. α-Methylstyrol;
b: 5 bis 25 Gew.-%, bevorzugt 10 bis 20 Gew.-% mindestens eines ABS-Schlagzähmodifikators b, mit
   b1: 40 bis 90 Gew.-% einer Pfropfgrundlage eines oder mehrerer Monomere, bestehend aus:
      b11: 70 bis 100 Gew.-% Butadien,
      b12: 0 bis 30 Gew.-% Styrol,
      b13: 0 bis 10 Gew.-% eines oder mehrerer polyfunktioneller, vernetzender Monomere,
   b2: 10 bis 60 Gew.-% einer Pfropfauflage bestehend aus:
      b21: 65 bis 95 Gew.-%, bevorzugt 70 bis 90 Gew.-%, insbesondere 72,5 bis 85 Gew.-%, oftmals besonders bevorzugt 75 bis 85 Gew.-% Styrol und
      b22) 5 bis 35 Gew.-%, bevorzugt 10 bis 30 Gew.-%, insbesondere 15 bis 27,5 Gew.-%, oftmals besonders bevorzugt 15 bis 25 Gew.-% Acrylnitril;
   wobei die Summe aus a und b 100 Gew.-% ergibt,
   dadurch gekennzeichnet, dass die Viskosität (gemessen nach ISO 11443) der Formmasse bei Scherraten von 1 bis 10 1/s und bei Temperaturen von 250 °C nicht höher als 1x10⁵ Pa*s ist und die Melt Volume Rate (MVR, gemessen nach ISO 1133 bei 220°C und 10 kg Last) mehr als 6 ml/10 min beträgt.

Bevorzugt weist der in den Polymermischungen A gemäß vorgenannter Ausführungsform, insbesondere für den 3D-Druck mit hoher Extrusionsgeschwindigkeit, enthaltene Schlagzähmodifikator b eine trimodale Teilchengrößenverteilung auf und ist insbesondere eine Mischung von ABS-Pfropfcopolymeren b', b" und b"', wobei die Pfropfgrundlage b1' des ABS-Pfropfcopolymers b' eine mittlere Teilchendurchmesser d₅₀ von 25 bis 200 nm, bevorzugt 30 bis 180 nm, besonders bevorzugt 60 bis 170 nm aufweist, die Pfropfgrundlage b1" des ABS-Pfropfcopolymers b" einen mittleren Teilchendurchmesser d₅₀ von 230 bis 330 nm, vorzugsweise von 240 bis 320 nm und besonders bevorzugt von 250 bis 310 nm aufweist und die Pfropfgrundlage b1"' des ABS-Pfropfcopolymers b'" einen mittleren Teilchendurchmesser d₅₀ von 340 bis 480 nm, vorzugsweise von 350 bis 470 nm und besonders bevorzugt von 360 bis 460 nm besitzt.

Die Pfropfgrundlagen b1', b1" und b1"' sind vorzugsweise Butadien-Homopolymere und die jeweilige Pfropfauflage b2 ist vorzugsweise ein SAN-Copolymer.

Bevorzugt ist eine erfindungsgemäße Formmasse gemäß vorgenannter Ausführungsform für den 3D-Druck mit hoher Extrusionsgeschwindigkeit, enthaltend (oder bestehend aus):
70 bis 99,9 Gew.-% Polymermischung A,
0 bis 29,9 Gew.-% Polymer B und
0,1 bis 30 Gew.-% Additive und/oder Hilfsmittel C,
jeweils bezogen auf die gesamte Formmasse, und wobei die Summe aus A, B und C 100 Gew.-% ergibt.

Besonders bevorzugt ist eine der vorgenannten erfindungsgemäßen Formmassen für den 3D-Druck mit hoher Extrusionsgeschwindigkeit, enthaltend (oder bestehend aus):
90 bis 99,9 Gew.-% Polymermischung A,
0,1 bis 10 Gew.-% Additive und/oder Hilfsmittel C,
jeweils bezogen auf die gesamte Formmasse, und wobei die Summe aus A, B und C 100 Gew.-% ergibt.

Weiterhin bevorzugt sind vorgenannte erfindungsgemäße Formmassen gemäß der Ausführungsform für den 3D-Druck mit hoher Extrusionsgeschwindigkeit, die 0,1 bis 2 Gew.-%, bevorzugt 0,1 bis 1 Gew.-% eines Gleitmittels, bezogen auf die gesamte Formmasse, enthalten. Bei dem Gleitmittel kann es sich um ein Innen- und/oder Außenschmiermittel handeln.

Weiterer Gegenstand der Erfindung ist ein Verfahren zur Herstellung dreidimensionsionaler Formkörper mit einem 3D-Drucker durch Fused Deposition Modeling, dadurch gekennzeichnet, dass Filamente aus der erfindungsgemäßen Formmasse gemäß der Ausführungsform für eine hohe Extrusionsgeschwindigkeit in einem 3D-Drucker mit einer Heizdüse, die einen Durchmesser von 0,3 bis 0,8 mm, bevorzugt 0,35 bis 0,45 mm, besonders bevorzugt 0,4 mm, aufweist, bei einer Düsentemperatur von 200 bis 270°C, bevorzugt 230 bis 250°C, ganz bevorzugt 240°C aufgeschmolzen werden und die aufgeschmolzene Formmasse mit einer Geschwindigkeit von 60 bis 180 mm/s, bevorzugt 80 bis 160 mm/s, besonders bevorzugt 100 bis 140 mm/s, extrudiert wird.

Gemäß einer weiteren Ausführungsform, insbesondere für den 3D-Druck in hoher Druckqualität, bevorzugt ist eine erfindungsgemäße thermoplastische Formmasse enthaltend eine Polymermischung A aus den Komponenten a und b:
a: 65 bis 95 Gew.-%, bevorzugt 70 bis 90 Gew.-%, besonders bevorzugt 75 bis 90 Gew.-% mindestens eines Polymers a mit einer mittleren Molmasse Mw von 150.000 bis 360.000 g/mol, ausgewählt aus:
   Vinylaromat-Copolymeren ausgewählt aus der Gruppe bestehend aus: Styrol-Acrylnitril-Copolymeren, α-Methylstyrol-Acrylnitril-Copolymeren, Styrol-Acrylnitril-Maleinsäureanhydrid-Copolymeren, Styrol-Acrylnitril-Phenylmaleinimid-Copolymeren, α-Methylstyrol-Acrylnitril-Methylmethacrylat-Copolymeren, wobei die Styrol-Acrylnitril-Copolymere und α-Methylstyrol-Acrylnitril-Copolymere aus 18 bis 35 Gew.-% Acrylnitril und 82 bis 65 Gew.-% Styrol bzw. α-Methylstyrol bestehen,, und die Styrol-Acrylnitril-Maleinsäureanhydrid-Copolymere, Styrol-Acrylnitril-N-Phenylmaleinimid-Copolymere und α-Methylstyrol-Acrylnitril-Methylmethacrylat-Copolymere aus 18 bis 35 Gew.-% Acrylnitril, 67 bis 64,9 Gew.-% Styrol und 0,1 bis 15 Gew.-% Maleinsäureanhydrid, N-Phenylmaleinimid oder Methylmethacrylat bestehen.
b: 5 bis 35 Gew.-%, bevorzugt 10 bis 30 Gew.-%, besonders bevorzugt 10 bis 25 Gew.-% mindestens eines Schlagzähmodifikators b, mit
   b1: 20 bis 90 Gew.-% einer Pfropfgrundlage eines oder mehrerer Monomere, bestehend aus:
      b11: 70 bis 100 Gew.-% mindestens eines konjugierten Diens,
      b12: 0 bis 30 Gew.-% mindestens eines weiteren Comonomers ausgewählt aus: Styrol, α-Methylstyrol, Acrylnitril, Methacrylnitril, MMA, MSA und N-Phenylmaleinimid (N-PMI);
      b13: 0 bis 10 Gew.-% eines oder mehrerer polyfunktioneller, vernetzender Monomere,
   b2: 10 bis 80 Gew.-% einer Pfropfauflage eines oder mehrerer Monomere, bestehend aus:
      b21: 65 bis 95 Gew.-%, bevorzugt 70 bis 90 Gew.-%, insbesondere 72,5 bis 85 Gew.-%, oftmals besonders bevorzugt 75 bis 85 Gew.-% mindestens eines vinylaromatischen Monomeren, vorzugsweise Styrol und/oder α-Methylstyrol, insbesondere Styrol;
      b22) 5 bis 35 Gew.-%, bevorzugt 10 bis 30 Gew.-%, insbesondere 15 bis 27,5 Gew.-%, oftmals besonders bevorzugt 15 bis 25 Gew.-% Acrylnitril und/oder Methacrylnitril, vorzugsweise Acrylnitril,
      b23) 0 bis 30 Gew.-%, bevorzugt 0 bis 20 Gew.-%, besonders bevorzugt 0 bis 15 Gew.-% mindestens eines weiteren monoethylenisch ungesättigten Monomeren ausgewählt aus: MMA, MSA und N-PMI;
wobei die Summe aus a und b 100 Gew.-% ergibt,
dadurch gekennzeichnet, dass die Viskosität (gemessen nach ISO 11443) der Formmasse bei Scherraten von 1 bis 10 1/s und bei Temperaturen von 250 °C nicht höher als 1x10⁵ Pa*s ist und die Melt Volume Rate (MVR, gemessen nach ISO 1133 bei 220°C und 10 kg Last) mehr als 6 ml/10 min beträgt.

Die in Gew.-% angegebenen Mengen der in dem Polymer a enthaltenen Comonomere addieren sich immer zu 100 Gew.-%. Die Summe der in Gew.-% angegebenen Mengen Komponenten b11, b12 und gegebenfalls b13, sowie sowie die Summe der in Gew.-% angegebenen Mengen der Komponenten b21, b22 und gegebenfalls b23 ergibt immer 100 Gew.-%.

Besonders bevorzugt gemäß der vorgenannten Ausführungsform, insbesondere für den 3D-Druck in hoher Druckqualität, ist eine erfindungsgemäße thermoplastische Formmasse enthaltend eine Polymermischung A aus den Komponenten a und b:
a: 65 bis 95 Gew.-%, bevorzugt 70 bis 90 Gew.-%, besonders bevorzugt 75 bis 90 Gew.-% mindestens eines Polymers a mit einer mittleren Molmasse Mw von 150.000 bis 360.000 g/mol, ausgewählt aus:
   Styrol-Acrylnitril-Copolymeren und α-Methylstyrol-Acrylnitril-Copolymeren, vorzugsweise Styrol-Acrylnitril-Copolymeren, bestehend aus: 18 bis 35 Gew.-% Acrylnitril und 82 bis 65 Gew.-% Styrol bzw. α-Methylstyrol;
b: 5 bis 35 Gew.-%, bevorzugt 10 bis 30 Gew.-%, besonders bevorzugt 10 bis 25 Gew.-% mindestens eines ABS-Schlagzähmodifikators b, mit
   b1: 40 bis 90 Gew.-% einer Pfropfgrundlage eines oder mehrerer Monomere, bestehend aus:
      b11: 70 bis 100 Gew.-% Butadien,
      b12: 0 bis 30 Gew.-% Styrol,
      b13: 0 bis 10 Gew.-% eines oder mehrerer polyfunktioneller, vernetzender Monomere,
   b2: 10 bis 60 Gew.-% einer Pfropfauflage bestehend aus:
      b21: 65 bis 95 Gew.-%, bevorzugt 70 bis 90 Gew.-%, insbesondere 72,5 bis 85 Gew.-%, oftmals besonders bevorzugt 75 bis 85 Gew.-% Styrol und
      b22) 5 bis 35 Gew.-%, bevorzugt 10 bis 30 Gew.-%, insbesondere 15 bis 27,5 Gew.-%, oftmals besonders bevorzugt 15 bis 25 Gew.-% Acrylnitril;
wobei die Summe aus a und b 100 Gew.-% ergibt,
dadurch gekennzeichnet, dass die Viskosität (gemessen nach ISO 11443) der Formmasse bei Scherraten von 1 bis 10 1/s und bei Temperaturen von 250 °C nicht höher als 1x10⁵ Pa*s ist und die Melt Volume Rate (MVR, gemessen nach ISO 1133 bei 220°C und 10 kg Last) mehr als 6 ml/10 min beträgt.

Bevorzugt weist der in den Polymermischungen A gemäß vorgenannter Ausführungsform, insbesondere für den 3D-Druck in hoher Druckqualität, enthaltene Schlagzähmodifikator b eine trimodale Teilchengrößenverteilung auf und ist insbesondere
eine Mischung von ABS-Pfropfcopolymeren b', b" und b"', wobei die Pfropfgrundlage b1' des ABS-Pfropfcopolymers b' eine mittlere Teilchendurchmesser d₅₀ von 25 bis 200 nm, bevorzugt 30 bis 180 nm, besonders bevorzugt 60 bis 170 nm aufweist, die Pfropfgrundlage b1" des ABS-Pfropfcopolymers b" einen mittleren Teilchendurchmesser d₅₀ von 230 bis 330 nm, vorzugsweise von 240 bis 320 nm und besonders bevorzugt von 250 bis 310 nm aufweist und die Pfropfgrundlage b1'" des ABS-Pfropfcopolymers b'" einen mittleren Teilchendurchmesser d₅₀ von 340 bis 480 nm, vorzugsweise von 350 bis 470 nm und besonders bevorzugt von 360 bis 460 nm besitzt.

Die Pfropfgrundlagen b1', b1" und b1'" sind vorzugsweise Butadien-Homopolymere und die jeweilige Pfropfauflage b2 ist vorzugsweise ein SAN-Copolymer.

Bevorzugt ist eine erfindungsgemäße Formmasse gemäß vorgenannter Ausführungsform, insbesondere für den 3D-Druck in hoher Druckqualität, enthaltend (oder bestehend aus):
70 bis 99,9 Gew.-% Polymermischung A,
0 bis 29,9 Gew.-% Polymer B und
0,1 bis 30 Gew.-% Additive und/oder Hilfsmittel C,
jeweils bezogen auf die gesamte Formmasse, und wobei die Summe aus A, B und C 100 Gew.-% ergibt.

Besonders bevorzugt ist eine der vorgenannten erfindungsgemäßen Formmassen, insbesondere für den 3D-Druck in hoher Druckqualität, enthaltend (oder bestehend aus):
90 bis 99,9 Gew.-% Polymermischung A,
0,1 bis 10 Gew.-% Additive und/oder Hilfsmittel C,
jeweils bezogen auf die gesamte Formmasse, und wobei die Summe aus A, B und C 100 Gew.-% ergibt.

Weiterer Gegenstand der Erfindung ist ein Verfahren zur Bestimmung der Druckqualität, insbesondere des Verzugs, der Dimensionsstabilität, der Schichtenhaftung und der Kontaktfläche zwischen den Schichten, eines durch 3D-Druck durch Fused Deposition Modeling hergestellten 3-dimensionalen Formkörpers aus der erfindungsgemäßen Formmasse, wobei das Verhältnis von der Breite des extrudierten Strangs zu minimaler Kantenlänge oder von der Breite des extrudierten Strangs zu minimalem Durchmesser des 3-dimensionalen Formkörpers mindestens 1:20, bevorzugt mindestens 1:50, besonders bevorzugt mindestens 1:100, ganz besonders bevorzugt 1:250 beträgt.

Übliche Breiten des extrudierten Strangs liegen bei 0,20 bis 1,00 mm, insbesondere bei 0,40 bis 0,90 mm, besonders bevorzugt bei 0,60 bis 0,70 mm.

Bei einer Strangbreite von 0,40 bis 0,90 mm, insbesondere 0,60 bis 0,70 mm, beträgt das Verhältnis von der Breite des extrudierten Strangs zu minimaler Kantenlänge oder von der Breite des extrudierten Strangs zu minimalem Durchmesser des 3-dimensionalen Körpers mindestens 1:20, bevorzugt mindestens 1:50, besonders bevorzugt mindestens 1:100.

Gemäß einer weiteren Ausführungsform, insbesondere zur Herstellung von Filamenten mit hoher Dimensionsstabilität für den 3D-Druck, bevorzugt ist eine erfindungsgemäße thermoplastische Formmasse enthaltend eine Polymermischung A aus den Komponenten a und b:
a: 30 bis 60 Gew.-%, bevorzugt 40 bis 60 Gew.-%, besonders bevorzugt 50 bis 60 Gew.-% mindestens eines Polymers a mit einer mittleren Molmasse Mw von 150.000 bis 360.000 g/mol, ausgewählt aus:
   Vinylaromat-Copolymeren ausgewählt aus der Gruppe bestehend aus: Styrol-Acrylnitril-Copolymeren, α-Methylstyrol-Acrylnitril-Copolymeren, Styrol-Acrylnitril-Maleinsäureanhydrid-Copolymeren, Styrol-Acrylnitril-Phenylmaleinimid-Copolymeren, α-Methylstyrol-Acrylnitril-Methylmethacrylat-Copolymeren,
   wobei die Styrol-Acrylnitril-Copolymere und α-Methylstyrol-Acrylnitril-Copolymere aus 18 bis 35 Gew.-% Acrylnitril und 82 bis 65 Gew.-% Styrol bzw. α-Methylstyrol bestehen,, und die Styrol-Acrylnitril-Maleinsäureanhydrid-Copolymere, Styrol-Acrylnitril-N-Phenylmaleinimid-Copolymere und α-Methylstyrol-Acrylnitril-Methylmethacrylat-Copolymere aus 18 bis 35 Gew.-% Acrylnitril, 67 bis 64,9 Gew.-% Styrol und 0,1 bis 15 Gew.-% Maleinsäureanhydrid, N-Phenylmaleinimid oder Methylmethacrylat bestehen,
b: 40 bis 70 Gew.-%, bevorzugt 40 bis 60 Gew.-%, besonders bevorzugt 40 bis 50 Gew.-% mindestens eines Schlagzähmodifikators b, mit
   b1: 20 bis 90 Gew.-% einer Pfropfgrundlage eines oder mehrerer Monomere, bestehend aus:
      b11: 70 bis 100 Gew.-% mindestens eines konjugierten Diens,
      b12: 0 bis 30 Gew.-% mindestens eines weiteren Comonomers ausgewählt aus: Styrol, α-Methylstyrol, Acrylnitril, Methacrylnitril, MMA, MSA und N-Phenylmaleinimid (N-PMI);
      b13: 0 bis 10 Gew.-% eines oder mehrerer polyfunktioneller, vernetzender Monomere,
   b2: 10 bis 80 Gew.-% einer Pfropfauflage eines oder mehrerer Monomere, bestehend aus:
      b21: 65 bis 95 Gew.-%, bevorzugt 70 bis 90 Gew.-%, insbesondere 72,5 bis 85 Gew.-%, oftmals besonders bevorzugt 75 bis 85 Gew.-% mindestens eines vinylaromatischen Monomeren, vorzugsweise Styrol und/oder α-Methylstyrol, insbesondere Styrol;
      b22) 5 bis 35 Gew.-%, bevorzugt 10 bis 30 Gew.-%, .insbesondere 15 bis 27,5 Gew.-%, oftmals besonders bevorzugt 15 bis 25 Gew.-% Acrylnitril und/oder Methacrylnitril, vorzugsweise Acrylnitril,
      b23) 0 bis 30 Gew.-%, bevorzugt 0 bis 20 Gew.-%, besonders bevorzugt 0 bis 15 Gew.-% mindestens eines weiteren monoethylenisch ungesättigten Monomeren ausgewählt aus: MMA, MSA und N-PMI;
wobei die Summe aus a und b 100 Gew.-% ergibt,
dadurch gekennzeichnet, dass die Viskosität (gemessen nach ISO 11443) der Formmasse bei Scherraten von 1 bis 10 1/s und bei Temperaturen von 250 °C nicht höher als 1x10⁵ Pa*s ist und die Melt Volume Rate (MVR, gemessen nach ISO 1133 bei 220°C und 10 kg Last) mehr als 6 ml/10 min beträgt.

Die in Gew.-% angegebenen Mengen der in dem Polymer a enthaltenen Comonomere addieren sich immer zu 100 Gew.-%. Die Summe der in Gew.-% angegebenen Mengen Komponenten b11, b12 und gegebenfalls b13, sowie sowie die Summe der in Gew.-% angegebenen Mengen der Komponenten b21, b22 und gegebenfalls b23 ergibt immer 100 Gew.-%.

Besonders bevorzugt gemäß der vorgenannten Ausführungsform, insbesondere zur Herstellung von Filamenten mit hoher Dimensionsstabilität für den 3D-Druck, ist eine erfindungsgemäße thermoplastische Formmasse enthaltend eine Polymermischung A aus den Komponenten a und b:
a: 30 bis 60 Gew.-%, bevorzugt 40 bis 60 Gew.-%, besonders bevorzugt 50 bis 60 Gew.-% mindestens eines Polymers a mit einer mittleren Molmasse Mw von 150.000 bis 360.000 g/mol, ausgewählt aus:
   Styrol-Acrylnitril-Copolymeren und α-Methylstyrol-Acrylnitril-Copolymeren, vorzugsweise Styrol-Acrylnitril-Copolymeren, bestehend aus: 18 bis 35 Gew.-% Acrylnitril und 82 bis 65 Gew.-% Styrol bzw. α-Methylstyrol;
b: 40 bis 70 Gew.-%, bevorzugt 40 bis 60 Gew.-%, besonders bevorzugt 40 bis 50 Gew.-% mindestens eines ABS-Schlagzähmodifikators b, mit
   b1: 40 bis 90 Gew.-% einer Pfropfgrundlage eines oder mehrerer Monomere, bestehend aus:
      b11: 70 bis 100 Gew.-% Butadien,
      b12: 0 bis 30 Gew.-% Styrol,
      b13: 0 bis 10 Gew.-% eines oder mehrerer polyfunktioneller, vernetzender Monomere,
   b2: 10 bis 60 Gew.-% einer Pfropfauflage bestehend aus:
      b21: 65 bis 95 Gew.-%, bevorzugt 70 bis 90 Gew.-%, insbesondere 72,5 bis 85 Gew.-%, oftmals besonders bevorzugt 75 bis 85 Gew.-% Styrol und
      b22) 5 bis 35 Gew.-%, bevorzugt 10 bis 30 Gew.-%, insbesondere 15 bis 27,5 Gew.-%, oftmals besonders bevorzugt 15 bis 25 Gew.-% Acrylnitril;
wobei die Summe aus a und b 100 Gew.-% ergibt,
dadurch gekennzeichnet, dass die Viskosität (gemessen nach ISO 11443) der Formmasse bei Scherraten von 1 bis 10 1/s und bei Temperaturen von 250 °C nicht höher als 1x10⁵ Pa*s ist und die Melt Volume Rate (MVR, gemessen nach ISO 1133 bei 220°C und 10 kg Last) mehr als 6 ml/10 min beträgt.

Bevorzugt weist der in den Polymermischungen A gemäß vorgenannter Ausführungsform, insbesondere zur Herstellung von Filamenten mit hoher Dimensionsstabilität für den 3D-Druck, enthaltene Schlagzähmodifikator b eine trimodale Teilchengrößenverteilung auf und ist insbesondere eine Mischung von ABS-Pfropfcopolymeren b', b" und b"', wobei die Pfropfgrundlage b1' des ABS-Pfropfcopolymers b' eine mittlere Teilchendurchmesser d₅₀ von 25 bis 200 nm, bevorzugt 30 bis 180 nm, besonders bevorzugt 60 bis 170 nm aufweist, die Pfropfgrundlage b1" des ABS-Pfropfcopolymers b" einen mittleren Teilchendurchmesser d₅₀ von 230 bis 330 nm, vorzugsweise von 240 bis 320 nm und besonders bevorzugt von 250 bis 310 nm aufweist und die Pfropfgrundlage b1"' des ABS-Pfropfcopolymers b'" einen mittleren Teilchendurchmesser d₅₀ von 340 bis 480 nm, vorzugsweise von 350 bis 470 nm und besonders bevorzugt von 360 bis 460 nm besitzt.

Die Pfropfgrundlagen b1', b1" und b1"' sind vorzugsweise Butadien-Homopolymere und die jeweilige Pfropfauflage b2 ist vorzugsweise ein SAN-Copolymer.

Bevorzugt ist eine erfindungsgemäße Formmasse gemäß vorgenannter Ausführungsform, insbesondere zur Herstellung von Filamenten mit hoher Dimensionsstabilität für den 3D-Druck, enthaltend (oder bestehend aus):
70 bis 99,9 Gew.-% Polymermischung A,
0 bis 29,9 Gew.-% Polymer B und
0,1 bis 30 Gew.-% Additive und/oder Hilfsmittel C,
jeweils bezogen auf die gesamte Formmasse, und wobei die Summe aus A, B und C 100 Gew.-% ergibt.

Besonders bevorzugt ist eine der vorgenannten erfindungsgemäßen Formmassen, insbesondere zur Herstellung von Filamenten mit hoher Dimensionsstabilität für den 3D-Druck, enthaltend (oder bestehend aus):
90 bis 99,9 Gew.-% Polymermischung A,
0,1 bis 10 Gew.-% Additive und/oder Hilfsmittel C,
jeweils bezogen auf die gesamte Formmasse, und wobei die Summe aus A, B und C 100 Gew.-% ergibt.

Weiterer Gegenstand der Erfindung ist die Verwendung der erfindungsgemäßen Formmasse gemäß der vorgenannten Ausführungsform zur Herstellung von Filamenten für den 3D-Druck.

### Polymer B

Die erfindungsgemäße Formmasse kann zusätzlich mindestens ein weiteres Polymer B ausgewählt aus Polycarbonaten, Polyamiden, Poly(meth)acrylaten und Polyestern und Vinylaromat-Dien-Copolymeren (SBC) enthalten. Bevorzugt als Polymer B sind Polycarbonate, Polyamide und/oder Poly(meth)acrylate.

Geeignete Polycarbonate sind an sich bekannt. Sie sind z.B. entsprechend den Verfahren der DE-B-1 300 266 durch Grenzflächenpolykondensation oder gemäß dem Verfahren der DE-A-14 95 730 durch Umsetzung von Biphenylcarbonat mit Bisphenolen erhältlich. Bevorzugtes Bisphenol ist 2,2-Di(4-hydroxyphenyl)propan, im allgemeinen - wie auch im folgenden - als Bisphenol A bezeichnet.

Anstelle von Bisphenol A können auch andere aromatische Dihydroxyverbindungen verwendet werden, insbesondere 2,2-Di(4-hydroxyphenyl)pentan, 2,6-Dihydroxynapthalin, 4,4'-Dihydroxydiphenylsulfon, 4,4'-Dihydroxydiphenylether, 4,4'-Dihydroxydiphenylsulfit, 4,4'-Dihydroxydiphenylmethan, 1,1-Di-(4-hydroxyphenyl)ethan oder 4,4-Dihydroxydiphenyl sowie Mischungen der vorgenannten Dihydroxyverbindungen.

Besonders bevorzugte Polycarbonate sind solche auf der Basis von Bisphenol A oder Bisphenol A zusammen mit bis zu 30 mol.-% der vorstehend genannten aromatischen Dihydroxyverbindungen.

Die relative Viskosität dieser Polycarbonate liegt im Allgemeinen im Bereich von 1,1 bis 1,5, insbesondere 1,28 bis 1,4 (gemessen bei 25°C in einer 0,5 gew.-%igen Lösung in Dichlormethan).

Geeignete Polyester sind ebenfalls an sich bekannt und in der Literatur beschrieben. Sie enthalten einen aromatischen Ring in der Hauptkette, der von einer aromatischen Dicarbonsäure herrührt. Der aromatische Ring kann auch substituiert sein, z.B. durch Halogen wie Chlor und Brom oder durch C1-C4-Alkylgruppen wie Methyl-, Ethyl-, i-bzw. n-Propyl- und n-, i- bzw. tert.-Butylgruppen.

Die Polyester können durch Umsetzung von aromatischen Dicarbonsäuren, deren Estern oder anderer esterbildender Derivate derselben mit aliphatischen Dihydroxyverbindungen in an sich bekannter Weise hergestellt werden.

Als bevorzugte Dicarbonsäuren sind Naphthalindicarbonsäure, Terephthalsäure und Isophthalsäure oder deren Mischungen zu nennen. Bis zu 10 mol.-% der aromatischen Dicarbonsäuren können durch aliphatische oder cycloaliphatische Dicarbonsäuren wie Adipinsäure, Azelainsäure, Sebacinsäure, Dodecandisäuren und Cyclohexandicarbonsäuren ersetzt werden.

Von den aliphatischen Dihydroxyverbindungen werden Diole mit 2 bis 6 Kohlenstoffatomen, insbesondere 1,2-Ethandiol, 1,4-Butandiol, 1,6-Hexandiol, 1,4-Hexandiol, 1,4-Cyclohexandiol und Neopentylglykol oder deren Mischungen bevorzugt.

Als besonders bevorzugte Polyester sind Polyalkylenterephthalate, die sich von Alkandiolen mit 2 bis 6 C-Atomen ableiten, zu nennen. Von diesen werden insbesondere Polyethylenterephthalat, Polyethylennaphthalat und Polybutylenterephthalat bevorzugt.

Die Viskositätszahl der Polyester liegt im Allgemeinen im Bereich von 60 bis 200 ml/g (gemessen in einer 0,5 gew.-%igen Lösung in einem Phenol/o-Dichlorbenzolgemisch (Gew.-Verh. 1:1 bei 25°C)).

Als Poly(meth)acrylate seien insbesondere Polymethylmethacrylat (PMMA) sowie Copolymere auf der Basis von Methylmethacrylat mit bis zu 40 Gew.-% weiterer copolymerisierbarer Monomerer genannt, wie sie beispielsweise unter den Bezeichnungen Lucryl^{®} von Fa. Lucite oder Plexiglas^{®} von Fa. Evonik erhältlich sind.

Teilkristalline, bevorzugt lineare Polyamide wie Polyamid-6, Polyamid-6,6, Polyamid-4,6, Polyamid-6,12 und teilkristalline Copolyamide auf Basis dieser Komponenten sind geeignet. Weiter können teilkristalline Polyamide eingesetzt werden, deren Säurekomponente ganz oder teilweise aus Adipinsäure und/oder Terephthalsäure und/oder Isophthalsäure und/oder Korksäure und/oder Sebacinsäure und/oder Acelainsäure und/oder Dodecandicarbonsäure und/oder einer Cyclohexandicarbonsäure besteht, und deren Diaminkomponente ganz oder teilweise insbesondere aus m und/oder p-Xylylendiamin und/oder Hexamethylendiamin und/oder 2,2,4- und/oder 2,4,4-Trimethylhexamethylendiamin und/oder Isophorondiamin besteht, und deren Zusammensetzungen im Prinzip bekannt sind (vgl. Encyclopedia of Polymers, Vol. 11, S. 315 ff.).

Die Molekulargewichte Mn (Zahlenmittel) der als Komponente B geeigneten Polyamide liegen bevorzugt im Bereich zwischen 5.000 und 100.000, besonders bevorzugt zwischen 10.000 und 80.000.

Geeignet sind teilkristalline lineare Polyamide z.B. mit einer relativen Viskosität von 2,2 bis 4,5, gemessen in 0,5%iger Lösung (0,5 g/l00 ml) in 96 gew.-%iger Schwefelsäure bei 25oC. Bevorzugt sind Polyamide, die sich ganz oder teilweise von Lactamen mit 7 bis 13 Ringgliedern ableiten, wie Polycaprolactam, Polycapryllactam oder Polylaurinlactam.

Geeignet sind ferner Polyamide, die durch Umsetzung von Dicarbonsäuren mit einem oder mehreren Diaminen erhalten werden. Geeignete Dicarbonsäuren sind beispielsweise Alkandicarbonsäuren mit 6 bis 12, insbesondere 6 bis 10 Kohlenstoffatomen, insbesondere Adipinsäure. Geeignete Diamine sind beispielsweise Alkan- oder Cycloalkandiamine mit 4 bis 12, insbesondere 4 bis 8 Kohlenstoffatomen; Hexamethylendiamin, m-Xylylendiamin, Bis(4-aminophenyl)methan, Bis(4-aminocyclohexyl)methan oder Bis(4-aminophenyl)propan-2,2 oder deren Mischungen sind besonders geeignete Partner zur Herstellung solcher Polyamide. Es kann vorteilhaft sein, die genannten Polyamide für sich herzustellen und deren Mischungen zu verwenden.

Besondere technische Bedeutung haben Polyamid-6 (Polycaprolactam), Polyamid-6,6 (Polyhexamethylenadipinamid) und Polyamide, die zu mindestens 80 Gew.-% aus wiederkehrenden Einheiten der Formel -[-NH-(CH2)4-NH-CO-(CH2)4-CO-]- aufgebaut sind. Die zuletzt genannten Polyamide sind durch Kondensation von 1,4-Diaminobutan mit Adipinsäure erhältlich. Geeignete Herstellungsverfahren für Polyamide sind z.B. in EP-A 38 094, EP-A 38 582 und EP-A 39 524 beschrieben.

Ebenfalls geeignet sind Polyamide mit geringem Anteil, vorzugsweise bis etwa 10 Gew.-%, an anderen einkondensierbaren Bestandteilen, insbesondere anderen Amidbildnern wie beispielsweise a,w-Aminosäuren oder N-Carbonsäure-anhydriden (Leuchs-anhydriden) von Aminosäuren.

Ferner können die erfindungsgemäßen Formmassen als Komponente B ein teilaromatisches Copolyamid mit dem nachstehend beschriebenen Aufbau enthalten.

Bevorzugte teilaromatische Copolyamide B enthalten 40 bis 90 Gew.-% Einheiten, die sich von Terephthalsäure und Hexamethylendiamin ableiten. Ein geringer Anteil der Terephthalsäure, vorzugsweise nicht mehr als 10 Gew.-% der Gesamtmenge an eingesetzten aromatischen Dicarbonsäuren kann durch Isophthalsäure oder andere aromatische Dicarbonsäuren ersetzt werden, vorzugsweise solche, in denen die Carboxylgruppen in para-Stellung stehen.
Neben den Einheiten, die sich von Terephthalsäure und Hexamethylendiamin ableiten, enthalten die teilaromatischen Copolyamide Einheiten, die sich von ε-Caprolactam ableiten und/oder Einheiten, die sich von Adipinsäure und Hexamethylendiamin ableiten. Der Anteil an Einheiten, die sich von ε-Caprolactam ableiten, beträgt bis zu 50 Gew. - %, vorzugsweise 20 bis 50 Gew.-%, insbesondere 25 bis 40 Gew.-%, während der Anteil an Einheiten, die sich von Adipinsäure und Hexamethylendiamin ableiten, bis zu 60 Gew.-%, vorzugsweise 30 bis 60 Gew.-% und insbesondere 35 bis 55 Gew.-% beträgt.

Die Copolyamide können auch sowohl Einheiten von ε-Caprolactam als auch Einheiten von Adipinsäure und Hexamethylendiamin enthalten; in diesem Fall beträgt der Anteil an Einheiten, die frei von aromatischen Gruppen sind, bevorzugt mindestens 10 Gew.-%, vorzugsweise mindestens 20 Gew.-%. Das Verhältnis der Einheiten, die sich von e-Caprolactam und von Adipinsäure und Hexamethylendiamin ableiten, unterliegt dabei keiner besonderen Beschränkung.

Der Schmelzpunkt besonders geeigneter teilaromatischer Copolyamide liegt z.B. im Bereich von 260 bis über 300°C, wobei dieser hohe Schmelzpunkt auch mit einer hohen Glasübergangstemperatur von in der Regel mehr als 75°C, insbesondere mehr als 85°C verbunden ist. Binäre Copolyamide auf der Basis von Terephthalsäure, Hexamethylendiamin und ε-Caprolactam weisen bei einem Gehalt von etwa 70 Gew.-% an Einheiten, die sich von Terephthalsäure und Hexamethylendiamin ableiten, einen Schmelzpunkt im Bereich von 300°C und eine Glasübergangstemperatur von mehr als 110°C auf. 'Binäre Copolyamide auf der Basis von Terephthalsäure, Adipinsäure und Hexamethylendiamin erreichen bereits bei einem Gehalt von etwa 55 Gew.-% Einheiten aus Terephthalsäure und Hexamethylendiamin einen Schmelzpunkt von 300°C und mehr, wobei die Glasübergangstemperatur nicht ganz so hoch liegt wie bei binären Copolyamiden, die ε-Caprolactam anstelle von Adipinsäure bzw. Adipinsäure/Hexamethylendiamin enthalten.

Geeignete teilaromatische Copolyamide können nach den in den EP-A 129 195 und EP-A 129 196 beschriebenen Verfahren hergestellt werden.

Erfindungsgemäß können als Polymer B ferner amorphe Polyamide verwendet werden. Basierend auf den bereits genannten Monomeren werden noch zusätzliche, häufig mit einer oder mehreren, die Kristallisation behindernden Seitengruppen versehene Monomere einkondensiert. Als Resultat erhält man ein in der Regel transparentes Polyamid.

Erfindungsgemäß können als Polymer B weiterhin Vinylaromat-Dien-Blockcopolymere (SBC), insbesondere Styrol-Butadien-Blockcopolymere, verwendet werden. Bevorzugt sind Blockcopolymere, enthaltend mindestens zwei Hartblöcke S1 und S2 aus vinylaromatischen Monomeren und mindestens einen dazwischenliegenden Weichblock aus Dienen und gegebenenfalls vinylaromatischen Monomeren, wobei der Anteil der Hartblöcke über 40 Gew.-%, bezogen auf das gesamte Blockcopolymer, beträgt. Als vinylaromatische Monomere können sowohl für die Hartblöcke S1 und S2 als auch für die Weichblöcke Styrol, a-Methylstyrol, p-Methylstyrol, Ethylstyrol, tert.-Butylstyrol, Vinyltoluol oder Mischungen davon verwendet werden. Bevorzugt wird Styrol verwendet.

Als Diene für den Weichblock B und/oder B/S werden bevorzugt Butadien, Isopren, 2,3-Dimethylbutadien, 1,3-Pentadien, 1,3-Hexadiene oder Piperylen oder Mischungen davon verwendet. Besonders bevorzugt wird 1, 3-Butadien verwendet.

Der Weichblock wird als B oder, falls dieser aus Dienen und vinylaromatischen Monomeren gebildet wird, als B/S bezeichnet.

Bevorzugte Blockcopolymere enthalten außenliegende Hartblöcke S1 und S2 mit unterschiedlicher Blocklänge. Das Molekulargewicht von S1 liegt bevorzugt im Bereich von 5000 bis 30000 g/mol, insbesondere im Bereich von 10000 bis 20000 g/mol. Das Molekulargewicht von S2 beträgt bevorzugt über 35000 g/mol. Bevorzugte Molekulargewichte von S2 liegen im Bereich von 50000 bis 150000 g/mol.

Zwischen den Hartblöcken S1 und S2 können sich auch mehrere Weichblöcke befinden. Bevorzugt werden mindestens 2, vorzugsweise statistische, Weichblöcke (B/S)₁ und (B/S)₂ mit unterschiedlichen Anteilen an vinylaromatischen Monomeren und damit unterschiedlichen Glasübergangstemperaturen.

Die Blockcopolymeren können eine lineare oder eine sternförmige Struktur aufweisen.

Als lineares Blockcopolymer wird bevorzugt eines der Struktur S1-(B/S)₁-(B/S)₂-S2 eingesetzt. Das molare Verhältnis von vinylaromatischem Monomer zu Dien S/B liegt im Block (B/S)₁ bevorzugt unter 0,25 und im Block (B/S)₂ bevorzugt im Bereich von 0,5 bis 2.

Als sternförmige Blockcopolymere werden bevorzugt solche mit einer Struktur aus mindestens einem Sternast aus der Blockfolge S1-(B/S) und einem Sternast der Blockfolge S2(B/S) oder solche mit mindestens einem Sternast der Blockfolge S1-(B/S)-S3 und mindestens einem Sternast der Blockfolge S2-(B/S)-S3. S3 steht hierbei für einen weiteren Hartblock aus den genannten vinylaromatischen Monomeren.

Besonders bevorzugt werden sternförmige Blockcopolymere mit Strukturen, die mindestens einen Sternast mit der Blockfolge S1-(B/S)₁-(B/S)₂ und mindestens einen Sternast mit der Blockfolge S2-(B/S)₁-(B/S)₂ oder die mindestens einen Sternast mit der Blockfolge S1-(B/S)₁-(B/S)₂-S3 und mindestens einen Sternast mit der Blockfolge S2-(B/S)₁-(B/S)₂-S3 aufweisen. Das molare Verhältnis von vinylaromatischem Monomer zu Dien S/B liegt im äußeren Block (B/S)₁ bevorzugt im Bereich von 0,5 bis 2 und im Block (B/S)₂ bevorzugt unterhalb 0,5.

Die Blockcopolymere B werden vorzugsweise durch sequentielle anionische Polymerisation hergestellt. Die vorgenannten SBCs sind bekannt. Ihre Herstellung wird beispielsweise in "Modern Styrenic Polymers: Polystyrenes and Styrenic Copolymers" (Eds., J. Scheirs, D. Priddy, Wiley, Chichester, UK, (2003), Seiten 502 bis 507) beschrieben.

Ferner sind geeignete Vinylaromat-Dien-Blockcopolymere (SBC) z.B. auch als Styrolux^{®} (Hersteller Styrolution, Frankfurt) im Handel erhältlich.

### Additive und/oder Hilfsmittel C

Die erfindungsgemäße Formmasse kann gegebenenfalls übliche Additive und/oder Hilfsmittel C wie Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, faser- und pulverförmige Füll- und Verstärkungsmittel, Keimbildungsmittel, Weichmacher usw. enthalten, deren Anteil in der Regel nicht mehr als 50 Gew.-% bevorzugt nicht mehr als 40 Gew.-% beträgt.

Als Beispiele für Oxidationsverzögerer und Wärmestabilisatoren sind Halogenide von Metallen der Gruppe I des periodischen Systems, z.B. Natrium-, Kalium- und/oder Lithiumhalogenide, ggf. in Verbindung mit Kupfer-(I)-Halogeniden, z.B. Chloriden, Bromiden, Jodiden, sterisch gehinderte Phenole, Hydrochinone, verschiedene substituierte Vertreter dieser Gruppen und deren Mischungen in Konzentrationen bis zu 1 Gew.-%, bezogen auf das Gewicht der thermoplastischen Formmasse genannt.

Als UV-Stabilisatoren, die im Allgemeinen in Mengen bis zu 2 Gew.-%, bezogen auf die Formmasse, verwendet werden, seien verschiedene substituierte Resorcine, Salicylate, Benzotriazole und Benzophenone genannt.

Weiterhin können organische Farbstoffe wie Nigrosin, Pigmente wie Titandioxid, Phthalocyanine, Ultramarinblau und Ruß als Farbstoffe zugesetzt werden, sowie faser- und pulverförmige Füllstoffe und Verstärkungsmittel. Beispiele für letztere sind Kohlenstoffasern, Glasfasern, amorphe Kieselsäure, Calciumsilicat (Wollastonit), Aluminiumsilicat, Magnesiumcarbonat, Kaolin, Kreide, gepulverter Quarz, Glimmer und Feldspat. Der Anteil derartiger Füll- und Farbstoffe beträgt im Allgemeinen bis zu 50 Gew.-%, bevorzugt bis zu 35 Gew.-%.

Als Keimbildungsmittel können z.B. Talkum, Calciumfluorid, Natriumphenylphosphinat, Aluminiumoxid, Siliciumdioxid und Nylon 22 eingesetzt werden.

Gleit- und Entformungsmittel, welche in der Regel in Mengen bis zu 1 Gew.-% eingesetzt werden können, sind z.B. langkettige Fettsäuren wie Stearinsäure oder Behensäure, deren Salze (z.B. Ca- oder Zn-Stearat) oder Ester (z.B. Stearylstearat oder Pentaerythrittetrastearat) sowie Amidderivate (z.B. Ethylenbisstearylamid). Zur besseren Verarbeitung können in Mengen bis zu 0,1 Gew.-% Antiblockmittel auf mineralischer Basis den erfindungsgemäßen Formmassen zugesetzt werden. Als Beispiele seien amorphe oder kristalline Kieselsäure, Calciumcarbonat oder Aluminiumsilikat genannt.

Als Verarbeitungshilfsmittel kann beispielsweise Mineralöl, vorzugsweise medizinisches Weißöl, in Mengen bis zu 5 Gew.-%, vorzugsweise bis zu 2 Gew.-% eingesetzt werden.

Als Beispiele für Weichmacher seien Phthalsäuredioctylester, Phthalsäuredibenzylester, Phthalsäurebutylbenzylester, Kohlenwasserstofföle, N-(n-Butyl)benzolsulfonamid und o- und p-Tolylethylsulfonamid genannt.

Zur weiteren Verbesserung der Schwerentflammbarkeit können alle für die jeweiligen Thermoplaste bekannten Flammschutzmittel zugegeben werden, insbesondere solche auf Basis von Phosphorverbindungen bzw. roter Phosphor selbst.

Die Herstellung der erfindungsgemäßen Formmassen aus den Komponenten a und b (und gegebenenfalls weiteren Polymeren B und Additiven und/oder Hilfsmitteln C kann nach allen bekannten Methoden erfolgen.

Gemäß einer bevorzugten Ausführungsform enthält (oder besteht) die erfindungsgemäße Formmasse (aus):
40 bis 100 Gew.-% Polymermischung A,
0 bis 60 Gew.-% Polymer B und
0 bis 40 Gew.-% Additive und/oder Hilfsmittel C,
jeweils bezogen auf die gesamte Formmasse, und wobei die Summe aus A, B und C 100 Gew.-% ergibt.

Weiterhin bevorzugt ist eine erfindungsgemäße Formmasse enthaltend (oder bestehend aus):
70 bis 99,9 Gew.-% Polymermischung A,
0 bis 29,9 Gew.-% Polymer B und
0,1 bis 30 Gew.-% Additive und/oder Hilfsmittel C,
jeweils bezogen auf die gesamte Formmasse, und wobei die Summe aus A, B und C 100 Gew.-% ergibt.

Weiterhin ganz bevorzugt ist eine erfindungsgemäße Formmasse enthaltend (oder bestehend aus):
90 bis 99,9 Gew.-% Polymermischung A,
0 bis 29,9 Gew.-% Polymer B und
0,1 bis 10 Gew.-% Additive und/oder Hilfsmittel C,
jeweils bezogen auf die gesamte Formmasse, und wobei die Summe aus A, B und C 100 Gew.-% ergibt.

Zur Herstellung der thermoplastischen Formmassen ist im Einzelnen das Folgende auszuführen:
Die Pfropfpolymere bzw Schlagzähmodifikatoren b mit bimodaler Teilchengrössenverteilung werden nach dem Verfahren der Emulsionspolymerisation hergestellt, wie es bereits oben beschrieben wurde. Die bimodale Teilchengrössenverteilung wird, wie bereits beschrieben, durch geeignete Maßnahmen eingestellt. Dabei ist die erwähnte (Teil)Agglomeration der Polymerteilchen, durch Zugabe einer agglomerierend wirkenden Dispersion eines Acrylesterpolymerisates, bevorzugt. Es können stattdessen oder in Kombination mit der (Teil)Agglomeration andere geeignete, dem Fachmann geläufige Maßnahmen ergriffen werden, um die bimodale Teilchengrössenverteilung einzustellen.

Weiterhin bevorzugt ist die getrennte Herstellung und nachfolgende Mischung von zwei oder, noch mehr bevorzugt, drei verschiedenen Pfropfcopolymeren b' und b" bzw. b', b" und b", die sich in ihrem mittleren Teilchendurchmesser unterscheiden. Die erhaltene Dispersion der Pfropfpolymere bzw Schlagzähmodifikatoren b kann entweder direkt mit den Komponenten a) und gegebenenfalls B) und/oder C) vermischt werden, oder sie kann zuvor aufgearbeitet werden. Letzteres Vorgehen ist bevorzugt.

Die Aufarbeitung der Dispersion der Pfropfpolymere bzw Schlagzähmodifikatoren b erfolgt in an sich bekannter Weise. Üblicherweise wird zunächst das Pfropfpolymer b aus der Dispersion ausgefällt, beispielsweise durch Zugabe von fällend wirkenden Salzlösungen (wie Calciumchlorid, Magnesiumsulfat, Alaun) oder Säuren (wie Essigsäure, Salzsäure oder Schwefelsäure) oder auch durch Einfrieren (Gefrierkoagulation) Die wässrige Phase kann in üblicher Weise, etwa durch Sieben, Filtrieren, Dekantieren oder Zentrifugieren, abgetrennt werden. Man erhält durch diese vorherige Abtrennung des Dispersionswassers wasserfeuchte Pfropfpolymere bzw Schlagzähmodifikatoren b mit einem Restwassergehalt von bis zu 60 Gew.-%, bezogen auf b, wobei das Restwasser z. B. sowohl am Pfropfpolymer b äußerlich anhaften als auch darin eingeschlossen sein kann.

Das Pfropfpolymer b kann danach erforderlichenfalls in bekannter Weise weiter getrocknet werden, z. B. durch Warmluft oder mittels eines Stromtrockners. Ebenso ist es möglich, die Dispersion durch Sprühtrocknung aufzuarbeiten.

Die Pfropfpolymere b werden mit dem Polymer a und, sofern enthalten, den weiteren Komponenten B und/oder C, in einer Mischvorrichtung vermischt, wobei eine im Wesentlichen schmelzflüssige Polymermischung entsteht.

"Im wesentlichen schmelzflüssig" bedeutet, dass die Polymermischung neben dem überwiegenden, schmelzflüssigen (erweichten) Anteil noch einen gewissen Anteil fester Bestandteile enthalten kann, beispielsweise ungeschmolzene Füll- und Verstärkungsstoffe wie Glasfasern, Metallflocken, oder auch ungeschmolzene Pigmente) Farbstoffe etc. "Schmelzflüssig" bedeutet, dass die Polymermischung zumindest zähflüssig ist, sie also zumindest in dem Maß erweicht ist, dass sie plastische Eigenschaften hat.

Als Mischvorrichtungen werden solche verwendet, die dem Fachmann bekannt sind. Man kann die Komponenten a und b, und - sofern enthalten - B und/oder C beispielsweise durch gemeinsames Extrudieren, Kneten oder Verwalzen vermischen, wobei die vorgenannten Komponenten notwendigenfalls zuvor aus der bei der Polymerisation erhaltenen Lösung oder aus der wässrigen Dispersion isoliert worden sind.

Im Falle des Einmischens einer oder mehrerer Komponenten in Form einer wässrigen Dispersion bzw. einer wässrigen oder nichtwässrigen Lösung, wird das Wasser bzw. das Lösungsmittel über eine Entgasungseinheit aus der Mischvorrichtung, bevorzugt einem Extruder, entfernt.

Als Mischvorrichtungen für die Durchführung des Verfahrens sind beispielsweise diskontinuierlich arbeitende, beheizte Innenkneter mit oder ohne Stempel, kontinuierlich arbeitende Kneter wie z. B. kontinuierliche Innenkneter, Schneckenkneter mit axial oszillierenden Schnecken, Banbury-Kneter, weiterhin Extruder sowie Walzenstühle, Mischwalzwerke mit beheizten Walzen und Kalander, zu nennen.

Bevorzugt wird als Mischvorrichtung ein Extruder verwendet. Für die Schmelzextrusion sind beispielsweise Ein- oder Zweiwellenextruder besonders geeignet. Ein Zweiwellenextruder ist bevorzugt.

In manchen Fällen bewirkt die beim Vermischen durch die Mischvorrichtung eingebrachte mechanische Energie bereits ein Schmelzen der Mischung, so dass die Mischvorrichtung nicht beheizt werden muss. Ansonsten wird die Mischvorrichtung in der Regel beheizt. Die Temperatur richtet sich nach den chemischen und physikalischen Eigenschaften der Komponenten a und b, und - sofern enthalten - B und/oder C, und ist so zu wählen, dass eine im Wesentlichen schmelzflüssige Polymermischung entsteht. Andererseits soll die Temperatur nicht unnötig hoch sein, um eine thermische Schädigung der Polymermischung zu vermeiden. Die eingebrachte mechanische Energie kann jedoch auch so hoch sein, dass die Mischvorrichtung sogar gekühlt werden muss. Üblicherweise betreibt man die Mischvorrichtung bei 160 bis 400, bevorzugt 180 bis 300°C.

In einer bevorzugten Ausführungsform erfolgt das Vermischen des Pfropfpolymers b mit dem Polymer a und, sofern enthalten, den weiteren Komponenten B und/oder C, in einem Extruder, wobei die Dispersion des Pfropfpolymers b ohne vorherige Abtrennung des Dispersionswassers direkt in den Extruder eindosiert wird. Das Wasser wird üblicherweise entlang des Extruders über geeignete Entgasungsvorrichtungen entfernt. Als Entgasungsvorrichtungen können beispielsweise Entgasungsöffnungen, die mit Rückhalteschnecken versehen sind (welche das Austreten der Polymermischung verhindern), eingesetzt werden.

In einer anderen, ebenfalls bevorzugten Ausführungsform erfolgt das Vermischen der vorgenannten Komponenten, in einem Extruder, wobei das Pfropfpolymer b zuvor vom Dispersionswasser abgetrennt wird. Man erhält durch diese vorherige Abtrennung des Dispersionswassers wasserfeuchte Pfropfpolymere b mit einem Restwassergehalt von bis zu 60 Gew.-%, bezogen auf b. Das vorhandene Restwasser kann dann, wie zuvor beschrieben, über Entgasungseinrichtungen des Extruders als Dampf entfernt werden. Besonders bevorzugt wird jedoch das Restwasser im Extruder nicht allein als Dampf entfernt, sondern es wird ein Teil des Restwassers mechanisch im Extruder entfernt und verlässt den Extruder in flüssiger Phase. Bei diesem sogenannten Abquetschverfahren (EP-B 0 993 476, S. 13-16) werden dem gleichen Extruder das Polymer a und - sofern vorhanden - die Komponenten B und/oder C zugeführt, so dass als Produkt des Verfahrens die fertige Formmasse extrudiert wird.

Die erfindungsgemäß eingesetzte Formmasse zeichnet sich auch dadurch aus, dass deren Restmonomergehalt nicht mehr als 2000 ppm, vorzugsweise nicht mehr als 1000 ppm, besonders bevorzugt nicht mehr als 500 ppm beträgt. Unter Restmonomergehalt ist der Anteil an nicht umgesetzten (nicht einpolymerisierten) Monomeren in der Formmasse zu verstehen.

Ferner zeichnet sich die erfindungsgemäß eingesetzte Formmasse dadurch aus, dass deren Lösungsmittelgehalt wie z.B. von Ethylbenzol, Toluol usw. nicht mehr als 1000 ppm, vorzugsweise nicht mehr als 500 ppm, besonders bevorzugt nicht mehr als 200 ppm beträgt.

Der geringe Restmonomer- und Lösungsmittelgehalt kann dadurch erzielt werden, dass übliche Verfahren zur Reduzierung von Restmonomeren und Lösungsmitteln aus Polymerschmelzen, wie z.B. im Kunststoffhandbuch, Hrg. R. Vieweg und G. Daumiller, Bd. 4 "Polystyrol", Carl-Hanser-Verlag München (1996), S. 121 bis 139 beschrieben, angewandt werden. In diesen Verfahren werden typische Entgasungsapparate wie beispielsweise Teilverdampfer, Flachverdampfer, Strangentgaser, Dünnschichtverdampfer oder Entgasungsextruder eingesetzt. Durch den geringen Restmonomergehalt sowie Lösungsmittelgehalt ist die erfindungsgemäß eingesetzte Formmasse geruchsarm und eignet sich daher hervorragend für 3D-Drucker im Heimanwendungsbereich (home-use) sowie für industriell eingesetzte 3D-Drucker.

Darüber hinaus enthält die Formmasse nicht mehr als 500 ppm, bevorzugt nicht mehr als 400 ppm, besonders bevorzugt nicht mehr als 300 ppm von Übergangsmetallen wie beispielsweise Fe, Mn und Zn. Formmassen mit einem solchen niedrigen Gehalt an Übergangsmetallen lassen sich beispielsweise dadurch erhalten, dass, falls zum Starten der Polymerisation der in der Formmasse enthaltenen Polymere Redoxinitiatoren eingesetzt werden, diese Redoxinitiatoren nur in geringen Mengen in Kombination mit Peroxiden verwendet werden. Weiterhin sollten deshalb in der Formmasse nur geringe Mengen an übergangsmetallhaltigen Mineralien (z.B. Pigmente) enthalten sein.

Zur Vermeidung von starkem Schrumpf liegt der lineare thermische Ausdehnungskoeffizient CLTE der erfindungsgemäßen Formmasse bevorzugt unter 100 x 10⁻⁶ 1/K, besonders bevorzugt unter 85 x 10⁻⁶ 1/K. Ein derartiger CLTE lässt sich durch Begrenzung des Anteils des Schlagzähmodifikators b auf 5 bis maximal 30 Gew.-% und/oder durch von den Zusatz von Additiven, insbesondere Mineralien, bevorzugt feinteiligen Mineralien mit einer mittleren Teilchengröße von < 500 µm, bevorzugt <100 µm, in Mengen von bis zu 40 Gew.-%, jeweils bezogen auf die gesamte Formmasse, einstellen.

Beispiele für geeignete Mineralien (mineralische Additive) sind Kohlenstofffasern, Glasfasern, amorphe Kieselsäure, Calciumsilicat (Wollastonit), Aluminiumsilicat, Magnesiumcarbonat, Kaolin, Kreide, gepulverter Quarz, Glimmer und Feldspat.

Gemäß einer besonderen Ausführungsform enthält die erfindungsgemäße Formmasse:
40 bis 100 Gew.-% Polymermischung A,
0 bis 60 Gew.-% Polymer B und
0 bis 40 Gew.-% Mineralien C,
jeweils bezogen auf die gesamte Formmasse, und wobei die Summe aus A, B und C 100 Gew.-% ergibt.

Besonders bevorzugt ist eine erfindungsgemäße Formmasse enthaltend:
70 bis 100 Gew.-% Polymermischung A,
0 bis 30 Gew.-% Polymer B und
0,1 bis 30 Gew.-% Mineralien C.

Weiterhin besonders bevorzugt ist eine erfindungsgemäße Formmasse enthaltend:
70 bis 99,9 Gew.-% Polymermischung A,
0 bis 29,9 Gew.-% Polymer B und
0,1 bis 30 Gew.-% Mineralien C.

Falls in den vorgenannten bevorzugten Formmassen der Anteil der Mineralien C kleiner 10 Gew.-% ist, beträgt in der Polymermischung A vorzugsweise der Anteil des Polymers a 70 bis 95 Gew.-% und der Anteil des Schlagzähmodifikators b 5 bis 30 Gew.-%.

Die Viskosität der gesamten Formmasse ist bei Scherraten von 1 bis 10 1/s und bei Temperaturen von 250 °C nicht höher als 1x10⁵ Pa*s, vorzugsweise nicht höher als 1x10⁴ Pa*s, besonders bevorzugt nicht höher als 1x10³ Pa*s.

Die Melt Volume Rate (MVR, gemessen nach ISO 1133 bei 220°C und 10 kg Last) beträgt im Allgemeinen mehr als 6 ml/10 min, bevorzugt mehr als 8 ml/10 min, besonders bevorzugt mehr als 12 ml/10 min.

Die vorgenannten Formmassen werden erfindungsgemäß zur Herstellung von dreidimensionalen Objekten von vorbestimmter Form mit Hilfe einer Vorrichtung für den 3D-Druck verwendet. Ein weiterer Gegenstand der Erfindung ist daher die Verwendung der erfindungsgemäßen Formmassen für den 3D-Druck.

Dabei können übliche für den 3D-Druck geeignete Vorrichtungen, insbesondere 3D-Drucker für die Heimanwendung (home-use), eingesetzt werden. Ebenfalls geeignet sind 3D-Drucker für den industriellen Bereich.

Der Aufbau des dreidimensionalen Objektes erfolgt im Allgemeinen computergesteuert aus der erfindungsgemäßen verflüssigten Formmasse nach vorgegebenen Maßen und Formen (CAD).

Zur Herstellung des dreidimensionalen Objektes können übliche Verfahren des 3D-Drucks gemäß dem Stand der Technik wie z.B. in EP 1015215 B1 und US 2009/0295032 A1 beschrieben verwendet werden.

Üblicherweise wird zunächst die erfindungsgemäße Formmasse verflüssigt und extrudiert, mehrere Schichten der Formmasse werden auf eine Basis wie einen Träger oder eine vorhergehende Schicht der Formmasse aufgebracht, und dann wird das geformte Material durch Kühlen unter die Erstarrungstemperatur der Formmasse verfestigt.

Bevorzugt ist die Verwendung der erfindungsgemäßen Formmasse in 3D-Druckern, die für das Fused Deposition Modeling-(FDM)-Verfahren geeignet sind.

Weiterer Gegenstand der Erfindung ist ein Verfahren zur Herstellung von 3-dimensionalen Formkörpern aus der erfindungsgemäßen Formmasse, wobei in einem 3D-Drucker mit einer in der Fertigungsebene frei beweglichen Heizdüse ein zugeführtes Filament aus der erfindungsgemäßen Formmasse verflüssigt wird, die verflüssigte Formmasse extrudiert und schichtweise mit Hilfe des Fused Deposition Modeling Verfahrens aufgetragen und, gegebenenfalls durch Kühlung, verfestigt wird. Die Düsentemperatur beträgt im Allgemeinen 200 bis 270°C, bevorzugt 230 bis 250°C, insbesondere 240°C.

Die erfindungsgemäßen Formmassen weisen ein optimiertes Zähigkeit/Viskositätsverhältnis auf und eignen sich von daher hervorragend für den 3D-Druck.

Ein weiterer Vorteil für den Heimanwendungsbereich sowie auch den industriellen Anwendungsbereich ist, dass die Formmasse geruchsarm ist, da sie nur einen geringen Restmonomergehalt sowie Lösungsmittelgehalt aufweist.

### Beispiele

Als Polymer a wurden folgende Copolymere eingesetzt:
a1: SAN-Copolymer mit 73 Gew.-% Styrol und 27 Gew.-% Acrylnitril (= S/AN 73/27), MVR (220°C/10'): 55 ccm/10 min
a2: SAN-Copolymer (S/AN 81/19), MVR (220°C/10'): 46 ccm/10 min
a3: SAN-Copolymer (S/AN 75/25), MVR (220°C/10'): 10 ccm/10 min
a4: SAN-Copolymer (S/AN 65/35), MVR (220°C/10'): 16 ccm/10 min
a5: SAN-Copolymer (S/AN 65/35), MVR (220°C/10'): 61 ccm/10 min
a6: AMSAN-Copolymer (AMS/AN 70/30); MVR (220°C/10'): 8 ccm/10 min
a7: Mischung SAN-Copolymer a1 und AMSAN-Copolymer a6 (Proportionen SAN/AMSAN gemäß Tabelle 1 bis 3)

Der MVR-Wert wurde nach ISO 1133 bei 220°C und 10 kg Last bestimmt.

Als Schlagzähmodifikator b mit einer trimodalen Teilchengrößenverteilung wurde eine Mischung von ABS-Pfropfcopolymeren b', b" und b'" mit verschiedenen Teilchendurchmessern eingesetzt, wobei der Anteil der ABS Pfropfcopolymere b" und b'" (Gewichtsverhältnis b" : b'" = 50 : 50) in der Mischung zusammen 60 Gew.-% und der Anteil ABS-Pfropfcopolymer b' 40 Gew.-% betrug.

### Herstellung ABS-Pfropfcopolymere b" und b'"

29 Gew.-Teile (gerechnet als Feststoff) eines unter Verwendung eines Polybutadiensaatlatex mit einem mittleren Teilchendurchmesser d₅₀ von 111 nm durch radikalische Saatpolymerisation hergestellten anionisch emulgierten Polybutadienlatex (b1 ") mit einem mittleren Teilchendurchmesser d₅₀ von 305 nm und einem Gelgehalt von 55 Gew.-% und 29 Gew.-Teile (gerechnet als Feststoff) eines unter Verwendung eines Polybutadiensaatlatex mit einem mittleren Teilchendurchmesser d₅₀ von 137 nm durch radikalische Saatpolymerisation hergestellten anionisch emulgierten Polybutadienlatex (b1"') mit einem mittleren Teilchendurchmesser d₅₀ von 404 nm und einem Gelgehalt von 81 Gew.-% werden mit Wasser auf einen Feststoffgehalt von ca. 20 Gew.-% gebracht, wonach auf 59°C erwärmt und mit 0,5 Gew.-Teilen Kaliumperoxodisulfat (gelöst in Wasser) versetzt wird.

Danach werden 42 Gew.-Teile eines Gemisches aus 73 Gew.-% Styrol, 27 Gew.-% Acrylnitril und 0,12 Gew.-Teile tert.-Dodecylmercaptan innerhalb 6 Stunden gleichmässig zudosiert; parallel dazu wird 1 Gew.-Teil (gerechnet als Festsubstanz) des Natriumsalzes eines Harzsäuregemisches (Dresinate 731, Abieta Chemie GmbH, Gersthofen, Deutschland, gelöst in alkalisch eingestelltem Wasser) über einen Zeitraum von 6 Stunden zudosiert. Im Laufe der 6 Stunden wird die Reaktionstemperatur von 59°C auf 80°C angehoben. Nach einer zweistündigen Nachreaktionszeit bei 80°C wird der Pfropflatex (b" und b"') nach Zugabe von ca. 1,0 Gew.-Teilen eines phenolischen Antioxidans mit einem Magnesiumsulfat/Essigsäure-Gemisch koaguliert und nach dem Waschen mit Wasser das resultierende feuchte Pulver bei 70°C getrocknet.

Herstellung ABS-Pfropfcopolymer b' 50 Gew.-Teile (gerechnet als Feststoff) eines unter Verwendung eines Polybutadiensaatlatex mit einem mittleren Teilchendurchmesser d₅₀ von 48 nm durch radikalische Saatpolymerisation hergestellten anionisch emulgierten Polybutadienlatex mit einem mittleren Teilchendurchmesser d₅₀ von 137 nm und einem Gelgehalt von 88 Gew.-% werden mit Wasser auf einen Feststoffgehalt von ca. 20 Gew.-% gebracht, wonach auf 59°C erwärmt und mit 0,5 Gew.-Teilen Kaliumperoxodisulfat (gelöst in Wasser) versetzt wird.

Danach werden 50 Gew.-Teile eines Gemisches aus 73 Gew.-% Styrol. 27 Gew.-% Acrylnitril und 0, 15 Gew.-Teile tert.-Dodecylmercaptan innerhalb 6 Stunden gleichmässig zudosiert, parallel dazu wird 1 Gew.-Teil (gerechnet als Festsubstanz) des Natriumsalzes eines Harzsäuregemisches (Dresinate 731, Abieta Chemie GmbH, Gersthofen, Deutschland, gelöst in alkalisch eingestelltem Wasser) über einen Zeitraum von 6 Stunden zudosiert. Im Laufe der 6 Stunden wird die Reaktionstemperatur von 59°C auf 80°C angehoben. Nach einer zweistündigen Nachreaktionszeit bei 80°C wird der Pfropflatex nach Zugabe von ca. 1,0 Gew.-Teilen eines phenolischen Antioxidans mit einem Magnesiumsulfat/Essigsäure-Gemisch koaguliert und nach dem Waschen mit Wasser das resultierende feuchte Pulver bei 70°C getrocknet.

### Herstellung der Formmassen

Die oben beschriebenen Polymerkomponenten a und b werden in den in den Tabellen 1 bis 3 angegebenen Anteilen unter Zusatz von Additiven in einem Doppelschneckenextruder bei 200 bis 250°C vermischt und zu einer Formmasse verarbeitet.

**Tabelle 1: 15 Gew.-% ABS-Pfropfcopolymer b (bezogen auf Polymermischung A)**

| Formmasse | 1Aa | 1Ba | 1Ca | 1 Da | 1Ea | 1Ga |
|---|---|---|---|---|---|---|
| b (Gew.-%, bezogen auf A) | 15 | 15 | 15 | 15 | 15 | 15 |
| a1 (Gew.-%, bezogen auf A) | 85 | | | | | 40 |
| a2 (Gew.-%, bezogen auf A) | | 85 | | | | |
| a3 (Gew.-%, bezogen auf A) | | | 85 | | | |
| a4 (Gew.-%, bezogen auf A) | | | | 85 | | |
| a5 (Gew.-%, bezogen auf A) | | | | | 85 | |
| a6 (Gew.-%, bezogen auf A) | | | | | | 45 |
| Irganox 1076 (Gew.-%, bezogen auf gesamte Formmasse) | 0,2 | 0,2 | 0,2 | 0,2 | 0,2 | 0,2 |
| Irganox PS802 (Gew.-%, bezogen auf gesamte Formmasse) | 0,3 | 0,3 | 0,3 | 0,3 | 0,3 | 0,3 |

Die in den Tabellen 1 bis 3 aufgeführten erfindungsgemäßen Formmassen bestehen aus 99,5 Gew.-% der Polymermischung A (deren Komponenten a und b zusammen 100 Gew.-% ergeben) und 0,5 Gew.-% der aufgeführten Additive.

**Tabelle 2: 30 Gew.-% ABS-Pfropfcopolymer b (bezogen auf Polymermischung A)**

| Formmasse | 2Aa | 2Ba | 2Da | 2Ea | 2Ga |
|---|---|---|---|---|---|
| B | 30 | 30 | 30 | 30 | 30 |
| a1 | 70 | | | | 35 |
| a2 | | 70 | | | |
| a3 | | | | | |
| a4 | | | 70 | | |
| a5 | | | | 70 | |
| a6 | | | | | 35 |
| Irganox 1076 | 0,2 | 0,2 | 0,2 | 0,2 | 0,2 |
| Irganox PS802 | 0,3 | 0,3 | 0,3 | 0,3 | 0,3 |

**Tabelle 3: 45 Gew.-% ABS-Pfropfcopolymer b (bezogen auf Polymermischung A)**

| Formmasse | 3Aa | 3Ba | 3Ea | 3Ga |
|---|---|---|---|---|
| b | 45 | 45 | 45 | 45 |
| a1 | 55 | | | 25 |
| a2 | | 55 | | |
| a3 | | | | |
| a4 | | | | |
| a5 | | | 55 | |
| a6 | | | | 30 |
| Irganox 1076 | 0,2 | 0,2 | 0,2 | 0,2 |
| Irganox PS802 | 0,3 | 0,3 | 0,3 | 0,3 |

Aus der erhaltenen Formmasse werden mit Hilfe eines Einschneckenextruders mit Zahnradpumpe mit einer um 90° nach unten umgelenkten Düse mit einem Düsendurchmesser von 2 mm in einem auf 85°C beheizten Wasserbad bei einem Temperaturprofil von 210 bis 225°C Filamente mit einem Soll-Durchmesser von 1,78 mm hergestellt. Die Qualität der Filamente wurde im Hinblick auf die Dimensionskonstanz mittels eines Dreiachs-Lasermesskopfes zur inline-Messung des Durchmessers und der Ovalität untersucht (Tabellen 4 bis 6).

**Tabelle 4: Filamentqualität Messreihe 1 (15 Gew.-% ABS-Pfropfcopolymer b, bezogen auf Polymermischung A)**

| Formmasse | Polymer a (MVR/AN-%) | MVR (cm³/10min) | Mittlerer Durchmesser DM(mm) | DM + (mm) | DM - (mm) | Ovalität (mm) | Bemerkung |
|---|---|---|---|---|---|---|---|
| 1Aa | a1 (55/27) | 55 | 1,780 | +0,038 | -0,032 | 0,027 | |
| 1Ba | a2 (46/19) | 37 | 1,779 | +0,029 | -0,029 | 0,021 | |
| 1Ca | a3 (10/25) | 9 | 1,779 | +0,036 | -0,032 | 0,018 | |
| 1Da | a4 (16/35) | 12 | 1,779 | +0,025 | -0,027 | 0,019 | |
| 1Ea | a5 (61/35) | 43 | 1,780 | +0,032 | -0,036 | 0,026 | |
| 1Ga | a1+a6 | 20 | 1,781 | -0,068 | -0,030 | 0,058 | Dellen |

**Tabelle 5: Filamentqualität Messreihe 2 (30 Gew.-% ABS-Pfropfcopolymer, bezogen auf Polymermischung A)**

| Formmasse | Polymer a (MVR/AN-%) | MVR (cm³/10min) | Mittlerer Durchmesser DM (mm) | DM + (mm) | DM-(mm) | Ovalität (mm) | Bemerkung |
|---|---|---|---|---|---|---|---|
| 2Aa | a1 (55/27) | 36 | 1,780 | +0,028 | -0,025 | 0,027 | |
| 2Ba | a2 (46/19) | 24 | 1,780 | +0,024 | -0,019 | 0,025 | |
| 2Da | a4 (16/35) | 8 | 1,779 | +0,029 | -0,021 | 0,020 | |
| 2Ea | a5 (61/35) | 27 | 1,779 | +0,034 | -0,025 | 0,020 | |
| 2Ga | a1+a6 | 15 | 1,781 | +0,035 | -0,035 | 0,029 | |

**Tabelle 6: Filamentqualität Messreihe 3 (45 Gew.-% ABS-Pfropfcopolymer, bezogen auf Polymermischung A)**

| Formmasse | Polymer a (MVR/AN-%) | MVR (cm³/10min) | Mittlerer Durchmesser DM (mm) | DM + (mm) | DM-(mm) | Ovalität (mm) |
|---|---|---|---|---|---|---|
| 3Aa | a1 (55/27) | 22 | 1,779 | +0,031 | -0,019 | 0,016 |
| 3Ba | a2 (46/19) | 14 | 1,780 | +0,041 | -0,051 | 0,015 |
| 3Ea | a5 (61/35) | 16 | 1,780 | +0,026 | -0,018 | 0,015 |
| 3Ga | a1+a6 | 8 | 1,778 | +0,023 | -0,022 | 0,017 |

### Ergebnisse zur Untersuchung der Filamentqualität

Es zeigt sich, dass sich mit den erfindungsgemäßen Formmassen sehr hohe Maßhaltigkeiten der Filamente erhalten lassen (DM = 1,78 mm +/- 0,04 mm, Ovalität < 0,03 mm mit fast allen Mischungen). Die besten Ergebnisse in Bezug auf die Dimensionskonstanz (DM maximal +0.031 mm und maximal -0.022 mm, maximale Ovalität 0,017 mm) werden mit vielen Mischungen, die hohe Anteile (45 Gew.-% gemäß Tabelle 3) des Schlagzähmodifikators enthalten, erhalten (siehe Tabelle 6).

### Fused Deposition Modeling-Versuche zur Untersuchung der Extrusionsgeschwindigkeit (Tabellen 7 bis 9)

Aus den erfindungsgemäßen Formmassen wurden 21 Filamente hergestellt. Die maximale Förder- bzw. Extrusionsgeschwindigkeit wurde durch Förderung von 50 mm Filament (Filamentdurchmesser = 1,75 mm) mittels eines mit einem Schrittmotor gesteuerten Reibrads durch eine Düse (Düsendurchmesser = 0,4 mm) bei verschiedenen Düsentemperaturen (190 °C bis 270 °C) ermittelt (Tabellen 7 bis 9).

**Tabelle 7**

| 15 Gew.-% ABS-Pfropfcopolymer (bezogen auf Polymermischung A) | | | | | | |
|---|---|---|---|---|---|---|
| Temperatur [°C] | Extrusionsgeschwindigkeit [mm/s] | | | | | |
| | 1Aa | 1Ba | 1Ca | 1Da | 1Ea | 1Ga |
| 190 | 19,1 | 28,7 | 9,6 | 9,6 | 38,3 | 9,6 |
| 200 | 28,7 | 38,3 | 38,3 | 47,9 | 67,0 | 28,7 |
| 210 | 86,1 | 76,6 | 57,4 | 67,0 | 76,6 | 67,0 |
| 220 | 105,3 | 105,3 | 86,1 | 86,1 | 105,3 | 76,6 |
| 230 | 124,4 | 124,4 | 95,7 | 95,7 | 114,8 | 95,7 |
| 240 | 134,0 | 134,0 | 105,3 | 105,3 | 134,0 | 105,3 |
| 250 | 153,1 | 143,6 | 124,4 | 114,8 | 153,1 | 124,4 |
| 260 | 162,7 | 162,7 | 134,0 | 134,0 | 162,7 | 134,0 |
| 270 | 181,8 | 172,3 | 143,6 | 143,6 | 172,3 | 143,6 |

**Tabelle 8**

| 30 Gew.-% ABS-Pfropfcopolymer (bezogen auf Polymermischung A) | | | | | |
|---|---|---|---|---|---|
| Temperatur [°C] | Extrusionsgeschwindigkeit [mm/s] | | | | |
| | 2Aa | 2Ba | 2Da | 2Ea | 2Ga |
| 190 | 47,9 | 47,9 | 9,6 | 19,1 | 6,4 |
| 200 | 67,0 | 67,0 | 19,1 | 38,3 | 28,7 |
| 210 | 86,1 | 76,6 | 47,9 | 47,9 | 38,3 |
| 220 | 95,7 | 95,7 | 57,4 | 67,0 | 57,4 |
| 230 | 105,3 | 105,3 | 67,0 | 76,6 | 67,0 |
| 240 | 124,4 | 114,8 | 76,6 | 86,1 | 76,6 |
| 250 | 143,6 | 124,4 | 86,1 | 105,3 | 95,7 |
| 260 | 153,1 | 134,0 | 105,3 | 124,4 | 105,3 |
| 270 | 162,7 | 143,6 | 114,8 | 134,0 | 114,8 |

**Tabelle 9**

| 45 Gew.-% ABS-Pfropfcopolymer (bezogen auf Polymermischung A) | | | | |
|---|---|---|---|---|
| Temperatur [°C] | Extrusionsgeschwindigkeit [mm/s] | | | |
| | 3Aa | 3Ba | 3Ea | 3Ga |
| 190 | 38,3 | 19,1 | 19,1 | 9,6 |
| 200 | 57,4 | 28,7 | 28,7 | 19,1 |
| 210 | 76,6 | 38,3 | 47,9 | 38,3 |
| 220 | 95,7 | 57,4 | 57,4 | 57,4 |
| 230 | 105,3 | 76,6 | 76,6 | 67,0 |
| 240 | 114,8 | 95,7 | 95,7 | 76,6 |
| 250 | 124,4 | 114,8 | 105,3 | 86,1 |
| 260 | 143,6 | 124,4 | 114,8 | 105,3 |
| 270 | 153,1 | 134,0 | 124,4 | 114,8 |

### Ergebnisse:

Bei einer Düsentemperatur von 240 °C werden mit allen erfindungsgemäßen Formmassen hohe Extrusionsgeschwindigkeiten von mindestens 60 mm/s erreicht. Die besten Ergebnisse werden mit den erfindungsgemäßen Formmassen, die 15 Gew.-% eines ABS-Pfropfcopolymergehalt und 85 Gew.-% eines SAN-Copolymers (jeweils (bezogen auf Polymermischung A) enthalten, erhalten (Tabelle 7). Bei 240°C werden für alle derartigen erfindungsgemäßen Filamente Extrusionsgeschwindigkeiten von mehr als 100 mm/s erreicht; bei den Formmassen 1Aa, 1Ba und 1Ea werden sogar Extrusionsgeschwindigkeiten von 134 mm/s erreicht.

### Untersuchung der Druckqualität

FDM-Versuche mit 21 Filamenten aus den erfindungsgemäßen Formmassen

**Tab. 10**

| | |
|---|---|
| 3D-Drucker | Umbau auf Ultimaker 1-Basis |
| Slicer | CuraEngine |
| Interface | pronterface |
| Düsendurchmesser | 0,4 mm |
| Wanddicke | 600 - 700 µm (Breite extrudierter Strang) |
| Düsentemperatur | 240 °C |
| Druckbett | Aluminium+Polyimid (Kapton) |
| Druckbetttemperatur | 135 °C |
| Bauraumtemperatur | ca. 40 °C bis 55 °C |
| Probenform | Bayreuth-Wü rfel Kantenlänge 50 mm |
| Schichtdicke | 0,25 mm |
| Verfahrmodus | Spiral |
| Druckgeschwindigkeit | 12,5 mm/s |
| Lüfter | Aus |

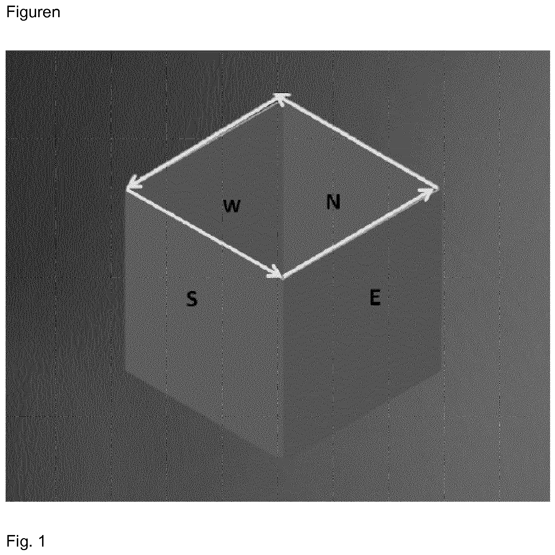

Figur 1 zeigt die Form eines Bayreuth-Würfels. Der Bayreuth-Würfel ist ein Hohlwürfel mit vier Seitenflächen S, E, N, W ohne Basisflächen.

Aus den erfindungsgemäßen Formmassen wurden mit Hilfe des FDM-Verfahrens derartige Bayreuth-Würfel hergestellt. Die Herstellungsbedingungen sind Tabelle 10 zu entnehmen.

Zur Beurteilung der Druckqualität wurde der Verzug, die Dimensionsstabilität, die Lagen- bzw. Schichtenhaftung, die Kontaktfläche zwischen den Schichten, die Betthaftung und das Fadenziehen sowie Materialablagerungen von dem bzw. an dem 3-dimensionalen Formkörper (Bayreuth-Würfel) bestimmt.

Dabei diente eine visuelle Kontrolle (Sichtprüfung) zur Beurteilung des Verzugs, des Fadenziehens und von Materialablagerungen.

Für die Güte der Druckqualität des durch 3D-Druck erhaltenen Bayreuth-Würfels aus den erfindungsgemäßen Formmassen galten dabei folgende Kriterien:
Dimensionsstabilität in X- und Y-Richtung: Abweichung < 1,5% Fadenziehen/Materialablagerung: Notenskala jeweils von Null bis 1, wobei eine 1 gut ist (kein Fadenziehen bzw. keine Materialablagerung) und eine Null schlecht ist.
Zugtest für Schichtenhaftung: mindestens 80% der Festigkeit eines spritzgegossenen oder gepressten Zugstabs
Betthaftung: Notenskala von Null bis 1, d.h. 1 (gut) = kein Ablösen vom Druckbett, Null (schlecht)

### Ergebnisse:

Mit allen erfindungsgemäßen Formmassen wurden Bayreuth-Würfel erhalten, die sich durch eine gute Schichtenhaftung, d.h. es werden mindestens 80% der Festigkeit eines spritzgegossenen Zugstabs erreicht, und eine große Kontaktfläche zwischen den Schichten auszeichnen.

Eine besonders gute Druckqualität im Hinblick auf alle zuvor genannten Kriterien wurde mit erfindungsgemäßen Formmassen enthaltend Polymere a2, a3 und a4 erhalten; die besten Ergebnisse wurde mit der erfindungsgemäßen Formmasse 1 Da erhalten, d.h. einer Formmasse enthaltend Polymer a4 und ein ABS-Pfropfcopolymer b mit einem Anteil von 15 Gew.-% (bezogen auf Polymermischung A).

Diese gedruckten Formkörper aus den Formmassen a2, a3 und a4 zeichnen sich dadurch aus, dass die Kriterien Fadenziehen/Materialablagerung und Betthaftung jeweils mit der Note 1 bewertet wurden, die Dimensionsstabilität in X- und Y-Richtung sehr gut ist und eine Abweichung kleiner 1,5% zeigt und der Zugtest für Schichtenhaftung zeigt, dass mindestens 80% der Festigkeit eines spritzgegossenen oder gepressten Zugstabs erreicht werden.

## Patentansprüche

1. Thermoplastische Formmasse für den 3D-Druck enthaltend eine Polymermischung A aus den Komponenten a und b:
a:30 bis 95 Gew.-% mindestens eines Polymers a mit einer mittleren Molmasse Mw von 150.000 bis 360.000 g/mol, ausgewählt aus:
Vinylaromat-Copolymeren ausgewählt aus der Gruppe bestehend aus: Styrol-Acrylnitril-Copolymeren, α-Methylstyrol-Acrylnitril-Copolymeren, Styrol-Maleinsäureanhydrid-Copolymeren, Styrol-Phenylmaleinimid-Copolymeren, Styrol-Methylmethacrylat-Copolymeren, Styrol-Acrylnitril-Maleinsäureanhydrid-Copolymeren, Styrol-Acrylnitril-Phenylmaleinimid-Copolymeren, α-Methylstyrol-Acrylnitril-Methylmethacrylat-Copolymeren, α-Methylstyrol-Acrylnitril-t-Butylmethacrylat-Copolymeren und Styrol-Acrylnitril-t-Butylmethacrylat-Copolymeren,
b:5 bis 70 Gew.-% mindestens eines Schlagzähmodifikators b, mit
b1: 20-90 Gew.-% einer Pfropfgrundlage eines oder mehrerer Monomere, bestehend aus:
b11: 70 bis 100 Gew.-% mindestens eines konjugierten Diens und/oder mindestens eines Acrylats;
b12: 0 bis 30 Gew.-% mindestens eines weiteren Comonomers ausgewählt aus:
Styrol, α-Methylstyrol, Acrylnitril, Methacrylnitril, MMA, MSA und N-Phenylmaleinimid (N-PMI);
b13: 0 bis 10 Gew.-% eines oder mehrerer polyfunktioneller, vernetzender Monomere, die, falls Komponente b11 Acrylat ist, in Mengen von mindestens 0.1 Gew % enthalten sein sollen,
b2: 10 bis 80 Gew.-% einer Pfropfauflage eines oder mehrerer Monomere, bestehend aus:
b21: 65 bis 95 Gew.-%, bevorzugt 70 bis 90 Gew.-%, insbesondere 72,5 bis 85 Gew.-%, besonders bevorzugt 75 bis 85 Gew.-% mindestens eines vinylaromatischen Monomeren, vorzugsweise Styrol und/oder α-Methylstyrol, insbesondere Styrol;
b22) 5 bis 35 Gew.-%, bevorzugt 10 bis 30 Gew.-%, insbesondere 15 bis 27,5 Gew.-%, oftmals besonders bevorzugt 15 bis 25 Gew.-% Acrylnitril und/oder Methacrylnitril, vorzugsweise Acrylnitril,
b23) 0 bis 30 Gew.-%, bevorzugt 0 bis 20 Gew.-%, besonders bevorzugt 0 bis 15 Gew.-% mindestens eines weiteren monoethylenisch ungesättigten Monomeren ausgewählt aus: MMA, MSA und N-PMI;
wobei die Summe aus a und b 100 Gew.-% ergibt,
**dadurch gekennzeichnet, dass** die Viskosität (gemessen nach ISO 11443) der Formmasse bei Scherraten von 1 bis 10 1/s und bei Temperaturen von 250 °C nicht höher als 1x10⁵ Pa*s ist und die Melt Volume Rate (MVR, gemessen nach ISO 1133 bei 220°C und 10 kg Last) mehr als 6 ml/10 min beträgt.

2. Formmasse gemäß Anspruch 1, **dadurch gekennzeichnet, dass** zusätzlich mindestens ein weiteres Polymer B, ausgewählt aus Polycarbonaten, Polyamiden, Poly(meth)acrylaten, Polyestern und Styrol-Butadien-Blockcopolymeren, und/oder übliche Additive und/oder Hilfsmittel C enthalten sind.

3. Formmasse gemäß Anspruch 1 oder 2, **dadurch gekennzeichnet, dass** mindestens die Hälfte der in der Formmasse enthaltenen Polymere amorphe Polymere sind.

4. Formmasse gemäß einem der Ansprüche 1 bis 3 enthaltend:
40 bis 100 Gew.-% Polymermischung A,
0 bis 60 Gew.-% Polymer B und
0 bis 40 Gew.-% Mineralien C,
jeweils bezogen auf die gesamte Formmasse, und wobei die Summe aus A; B und C 100 Gew.-% ergibt.

5. Formmasse gemäß einem der Ansprüche 1 bis 4, **dadurch gekennzeichnet, dass** die Teilchengröße des Schlagzähmodifikators b mindestens 50 nm und höchstens 10 µm beträgt.

6. Formmasse gemäß einem der Ansprüche 1 bis 5, **dadurch gekennzeichnet, dass** Polymer a ein Styrol-Acrylnitril-Copolymer (SAN) aus 18 bis 35 Gew.-% Acrylnitril und 82 bis 65 Gew.-% Styrol ist.

7. Formmasse gemäß einem der Ansprüche 1 bis 6, **dadurch gekennzeichnet, dass** der Schlagzähmodifikator b bi-, tri- oder multimodale Teilchengrößenverteilungen aufweist.

8. Formmasse gemäß einem der Ansprüche 1 bis 7, **dadurch gekennzeichnet, dass** der Schlagzähmodifikator b ein ABS-Schlagzähmodifikator b mit
b1: 40 bis 90 Gew.-% einer Pfropfgrundlage bestehend aus:
b11: 70 bis 100 Gew.-%, bevorzugt 90 bis 100 Gew.-% Butadien,
b12: 0 bis 30 Gew.-%, bevorzugt 0 bis 10 Gew.-%, Styrol und
b2: 10 bis 60 Gew.-% einer Pfropfauflage bestehend aus:
b21: 65 bis 95 Gew.-% Styrol;
b22: 5 bis 35 Gew.-% Acrylnitril und
b23: 0 bis 30 Gew.-% MMA.

9. Formmasse gemäß einem der Ansprüche 1 bis 8, **dadurch gekennzeichnet, dass** der Schlagzähmodifikator b eine trimodale Teilchengrößenverteilung aufweist und eine Mischung von ABS-Pfropfcopolymeren b', b" und b''' ist, wobei die Pfropfgrundlage b1' des ABS-Pfropfcopolymers b' einen mittlere Teilchendurchmesser d₅₀ von 25 bis 200 nm, die Pfropfgrundlage b1" des ABS-Pfropfcopolymers b" einen mittleren Teilchendurchmesser d₅₀ von 230 bis 330 nm und die Pfropfgrundlage b1''' des ABS-Pfropfcopolymers b''' einen mittleren Teilchendurchmesser d₅₀ von 340 bis 480 nm besitzt.

10. Formmasse gemäß einem der Ansprüche 1 bis 9, **dadurch gekennzeichnet, dass** in der Polymermischung A der Anteil des Polymers a 75 bis 95 Gew.-%, bevorzugt 80 bis 90 Gew.-%, und der Anteil des Schlagzähmodifikators b 5 bis 25 Gew.-%;, bevorzugt 10 bis 20 Gew.-% beträgt.

11. Formmasse gemäß einem der Ansprüche 1 bis 9, **dadurch gekennzeichnet, dass** in der Polymermischung A der Anteil des Polymers a 65 bis 95 Gew.-%, bevorzugt 70 bis 90 Gew.-%, besonders bevorzugt 75 bis 90 Gew.-%, und der Anteil des Schlagzähmodifikators b 5 bis 35 Gew.-%, bevorzugt 10 bis 30 Gew.-%, ganz besonders bevorzugt 10 bis 25 Gew.-% beträgt.

12. Formmasse gemäß einem der Ansprüche 1 bis 9, **dadurch gekennzeichnet, dass** in der Polymermischung A der Anteil des Polymers a 30 bis 60 Gew.-%, bevorzugt 40 bis 60 Gew.-%, besonders bevorzugt 50 bis 60 Gew.-% und der Anteil des Schlagzähmodifikators b 40 bis 70 Gew.-%, bevorzugt 40 bis 60 Gew.-%, ganz besonders bevorzugt 40 bis 50 Gew.-% beträgt.

13. Formmasse gemäß einem der Ansprüche 1 bis 12, **dadurch gekennzeichnet, dass** der lineare thermische Ausdehnungskoeffizient CLTE kleiner 100 x 10⁻⁶ 1/K ist.

14. Formmasse gemäß einem der Ansprüche 1 bis 13, **dadurch gekennzeichnet, dass** der Restmonomergehalt nicht mehr als 2000 ppm beträgt.

15. Formmasse gemäß einem der Ansprüche 1 bis 14, **dadurch gekennzeichnet, dass** der Lösungsmittelgehalt nicht mehr als 1000 ppm beträgt.

16. Formmasse gemäß einem der Ansprüche 1 bis 15, **dadurch gekennzeichnet, dass** der Gehalt an Übergangsmetallen nicht mehr als 500 ppm beträgt.

17. Verwendung der Formmasse gemäß einem der Ansprüche 1 bis 16 für den 3D-Druck.

18. Verwendung der Formmasse gemäß Anspruch 12 zur Herstellung von Filamenten für den 3D-Druck.

19. Verwendung der Formmasse gemäß einem der Ansprüche 1 bis 17 in 3D-Druckern für die Heimanwendung.

20. Verfahren zur Herstellung von 3-dimensionalen Formkörpern aus der Formmasse gemäß einem der Ansprüche 1 bis 16 durch Fused Deposition Modeling, wobei in einem 3D-Drucker mit einer in der Fertigungsebene frei beweglichen Heizdüse ein zugeführtes Filament aus der Formmasse verflüssigt wird, die verflüssigte Formmasse extrudiert und schichtweise aufgetragen und verfestigt wird.

21. Verfahren gemäß Anspruch 20, **dadurch gekennzeichnet, dass** Filamente hergestellt aus der erfindungsgemäßen Formmasse gemäß Anspruch 10 in einem 3D-Drucker mit einem Heizdüsendurchmesser von 0,3 bis 0,8 mm bei einer Düsentemperatur von 200 bis 270°C aufgeschmolzen werden, und die aufgeschmolzene Formmasse mit einer Extrusionsgeschwindigkeit von 60 bis 180 mm/s, bevorzugt 80 bis 160 mm/s extrudiert wird.

22. Verfahren zur Bestimmung der Druckqualität eines nach Anspruch 20 hergestellten 3-dimensionalen Formkörpers, **dadurch gekennzeichnet, dass** das Verhältnis von der Breite des extrudierten Strangs zu minimaler Kantenlänge oder von der Breite des extrudierten Strangs zu minimalem Durchmesser des 3-dimensionalen Formkörpers mindestens 1:20, bevorzugt mindestens 1:50, besonders bevorzugt mindestens 1:100, ganz besonders bevorzugt 1:250 beträgt.

## Claims

1. A thermoplastic molding composition for 3D printing, comprising a polymer mixture A composed of components a and b:
a: 30 to 95 wt% of at least one polymer a having an average molar mass Mw of 150 000 to 360 000 g/mol, selected from:
vinylaromatic copolymers selected from the group consisting of: styrene-acrylonitrile copolymers, α-methylstyrene-acrylonitrile copolymers, styrenemaleic anhydride copolymers, styrene-phenylmaleimide copolymers, styrene-methyl methacrylate copolymers, styrene-acrylonitrile-maleic anhydride copolymers, styrene-acrylonitrile-phenylmaleimide copolymers, α-methylstyrene-acrylonitrile-methyl methacrylate copolymers, α-methylstyrene-acrylonitrile-tert-butyl methacrylate copolymers, and styrene-acrylonitrile-tert-butyl methacrylate copolymers,
b: 5 to 70 wt% of at least one impact modifier b, with
b1: 20-90 wt% of a graft base of one or more monomers, consisting of:
b11: 70 to 100 wt% of at least one conjugated diene and/or at least one acrylate;
b12: 0 to 30 wt% of at least one further comonomer selected from:
styrene, α-methylstyrene, acrylonitrile, methacrylonitrile, MMA, MAN, and N-phenylmaleimide (N-PMI);
b13: 0 to 10 wt% of one or more polyfunctional, crosslinking monomers which, if component b11 is acrylate, are to be present in amounts of at least 0.1 wt%,
b2: 10 to 80 wt% of a graft of one or more monomers, consisting of:
b21: 65 to 95 wt%, preferably 70 to 90 wt%, more particularly 72.5 to 85 wt%, more preferably 75 to 85 wt% of at least one vinylaromatic monomer, preferably styrene and/or α-methylstyrene, more particularly styrene;
b22) 5 to 35 wt%, preferably 10 to 30 wt%, more particularly 15 to 27.5 wt%, often more preferably 15 to 25 wt%, of acrylonitrile and/or methacrylonitrile, preferably acrylonitrile,
b23: 0 to 30 wt%, preferably 0 to 20 wt%, more preferably 0 to 15 wt% of at least one further monoethylenically unsaturated monomer selected from: MMA, MAN, and N-PMI;
where the sum of a and b makes 100 wt%,
**characterized in that** the viscosity (measured to ISO 11443) of the molding composition at shear rates of 1 to 10 1/s and at temperatures of 250°C is not higher than 1x10⁵ Pa*s and the melt volume rate (MVR, measured to ISO 1133 at 220°C and 10 kg load) is more than 6 ml/10 min.

2. The molding composition as claimed in claim 1, **characterized in that** additionally there are at least one further polymer B, selected from polycarbonates, polyamides, poly(meth)acrylates, polyesters, and styrene-butadiene block copolymers, and/or customary additives and/or auxiliaries C.

3. The molding composition as claimed in claim 1 or 2, **characterized in that** at least half of the polymers present in the molding composition are amorphous polymers.

4. The molding composition as claimed in any of claims 1 to 3, comprising:
40 to 100 wt% of polymer mixture A,
0 to 60 wt% of polymer B, and
0 to 40 wt% of minerals C,
based in each case on the overall molding composition, and where the sum of A, B and C is 100 wt%.

5. The molding composition as claimed in any of claims 1 to 4, **characterized in that** the particle size of the impact modifier b is at least 50 nm and at most 10 µm.

6. The molding composition as claimed in any of claims 1 to 5, **characterized in that** polymer a is a styrene-acrylonitrile copolymer (SAN) comprising 18 to 35 wt% acrylonitrile and 82 to 65 wt% styrene.

7. The molding composition as claimed in any of claims 1 to 6, **characterized in that** the impact modifier b has bimodal, trimodal or multimodal particle size distributions.

8. The molding composition as claimed in any of claims 1 to 7, **characterized in that** the impact modifier b is an ABS impact modifier b with
b1: 40 to 90 wt% of a graft base consisting of:
b11: 70 to 100 wt%, preferably 90 to 100 wt%, of butadiene,
b12: 0 to 30 wt%, preferably 0 to 10 wt%, of styrene, and
b2: 10 to 60 wt% of a graft consisting of:
b21: 65 to 95 wt% of styrene,
b22: 5 to 35 wt% of acrylonitrile, and
b23: 0 to 30 wt% of MMA.

9. The molding composition as claimed in any of claims 1 to 8, **characterized in that** the impact modifier b has a trimodal particle size distribution and is a mixture of ABS graft copolymers b', b", and b''', where the graft base b1' of the ABS graft copolymer b' has an average particle diameter d₅₀ of 25 to 200 nm, the graft base b1" of the ABS graft copolymer b" has an average particle diameter d₅₀ of 230 to 330 nm, and the graft base b1''' of the ABS graft copolymer b''' has an average particle diameter d₅₀ of 340 to 480 nm.

10. The molding composition as claimed in any of claims 1 to 9, **characterized in that** in the polymer mixture A, the fraction of the polymer a is 75 to 95 wt%, preferably 80 to 90 wt%, and the fraction of the impact modifier b is 5 to 25 wt%, preferably 10 to 20 wt%.

11. The molding composition as claimed in any of claims 1 to 9, **characterized in that** in the polymer mixture A, the fraction of the polymer a is 65 to 95 wt%, preferably 70 to 90 wt%, and more preferably 75 to 90 wt%, and the fraction of the impact modifier b is 5 to 35 wt%, preferably 10 to 30 wt%, very preferably 10 to 25 wt%.

12. The molding composition as claimed in any of claims 1 to 9, **characterized in that** in the polymer mixture A, the fraction of the polymer a is 30 to 60 wt%, preferably 40 to 60 wt%, and more preferably 50 to 60 wt%, and the fraction of the impact modifier b is 40 to 70 wt%, preferably 40 to 60 wt%, very preferably 40 to 50 wt%.

13. The molding composition as claimed in any of claims 1 to 12, **characterized in that** the coefficient of linear thermal expansion is less than 10 × 10⁻⁶ 1/K.

14. The molding composition as claimed in any of claims 1 to 13, **characterized in that** the residual monomer content is not more than 2000 ppm.

15. The molding composition as claimed in any of claims 1 to 14, **characterized in that** the solvent content is not more than 1000 ppm.

16. The molding composition as claimed in any of claims 1 to 15, **characterized in that** the transition metal content is not more than 500 ppm.

17. The use of the molding composition as claimed in any of claims 1 to 16 for 3D printing.

18. The use of the molding composition as claimed in claim 12 for producing filaments for 3D printing.

19. The use of the molding composition as claimed in any of claims 1 to 17 in 3D printers for home application.

20. A method for producing 3-dimensional moldings from the molding composition as claimed in any of claims 1 to 16 by fused deposition modeling, where, in a 3D printer with a heating nozzle freely movable in the fabrication plane, a supplied filament of the molding composition is fluidized, and the fluidized molding composition is extruded, applied layer by layer, and consolidated.

21. The method as claimed in claim 20, **characterized in that** filaments produced from the molding composition of the invention as claimed in claim 10 are melted in a 3D printer having a heating nozzle diameter of 0.3 to 0.8 mm at a nozzle temperature of 200 to 270°C, and the melted molding composition is extruded at an extrusion rate of 60 to 180 mm/s, preferably 80 to 160 mm/s.

22. A method for determining the print quality of a 3-dimensional molding produced as claimed in claim 20, **characterized in that** the ratio of the width of the extruded strand to minimum edge length or of the width of the extruded strand to minimum diameter of the 3-dimensional molding is at least 1:20, preferably at least 1:50, more preferably at least 1:100, very preferably 1:250.

## Revendications

1. Matière à mouler thermoplastique pour l'impression en 3D, contenant un mélange de polymères A constitué des composants a et b :
a : 30 à 95 % en poids d'au moins un polymère a ayant une masse molaire moyenne Mw de 150 000 à 360 000 g/mol, choisi parmi :
des copolymères vinylaromatiques choisis dans le groupe constitué par : des copolymères de styrène et acrylonitrile, des copolymères d'α-méthylstyrène et acrylonitrile, des copolymères de styrène et anhydride maléique, des copolymères de styrène et phénylmaléinimide, des copolymères de styrène et méthacrylate de méthyle, des copolymères de styrène, acrylonitrile et anhydride maléique, des copolymères de styrène, acrylonitrile et phénylmaléinimide, des copolymères d'α-méthylstyrène, acrylonitrile et méthacrylate de méthyle, des copolymères d'α-méthylstyrène, acrylonitrile et méthacrylate de tert-butyle, et des copolymères de styrène, acrylonitrile et méthacrylate de tert-butyle,
b : 5 à 70 % en poids d'au moins un modificateur de résilience b, comprenant
b1 : 20 à 90 % en poids d'une base de greffage d'un ou plusieurs monomères, constituée de :
b11 : 70 à 100 % en poids d'au moins un diène conjugué et/ou d'au moins un acrylate ;
b12 : 0 à 30 % en poids d'au moins un autre comonomère choisi parmi : le styrène, l'α-méthylstyrène, l'acrylonitrile, le méthacrylonitrile, le MMA, le MSA et le N-phénylmaléinimide (N-PMI) ;
b13 : 0 à 10 % en poids d'un ou plusieurs monomères polyfonctionnels réticulants qui, lorsque le composant b11 est un acrylate, doivent être contenus en des quantités au moins égales à 0,1 % en poids,
b2 : 10 à 80 % en poids d'une greffe d'un ou plusieurs monomères, constituée de:
b21 : 65 à 95 % en poids, de préférence 70 à 90 % en poids, en particulier 72,5 à 85 % en poids, de manière particulièrement préférée 75 à 85 % en poids d'au moins un monomère vinylaromatique, préférentiellement du styrène et/ou de l'α-méthylstyrène, en particulier du styrène ;
b22 : 5 à 35 % en poids, de préférence 10 à 30 % en poids, en particulier 15 à 27,5 % en poids, de manière particulièrement préférée en général 15 à 25 % en poids d'acrylonitrile et/ou de méthacrylonitrile, préférentiellement d'acrylonitrile,
b23 : 0 à 30 % en poids, de préférence 0 à 20 % en poids, de manière particulièrement préférée 0 à 15 % en poids d'au moins un autre monomère monoéthyléniquement insaturé choisi parmi : le MMA, le MSA et le N-PMI ;
la somme de a et b étant égale à 100 % en poids,
**caractérisée en ce que** la viscosité (mesurée suivant ISO 11443) de la matière à mouler n'est pas supérieure à 1 x 10⁵ Pa*s à des vitesses de cisaillement de 1 à 10 s⁻¹ et à des températures de 250 °C et **en ce que** l'indice de fluidité en volume (MVR, mesuré suivant ISO 1133 à 220°C sous une charge de 10 kg) est supérieur à 6 ml/10 min.

2. Matière à mouler selon la revendication 1, **caractérisée en ce qu'**elle contient en plus au moins un autre polymère B, choisi parmi des polycarbonates, des polyamides, des poly(méth)acrylates, des polyesters et des copolymères à blocs de styrène et butadiène, et/ou des additifs et/ou adjuvants usuels C.

3. Matière à mouler selon la revendication 1 ou la revendication 2, **caractérisée en ce que** la moitié au moins des polymères contenus dans la matière à mouler sont des polymères amorphes.

4. Matière à mouler selon l'une des revendications 1 à 3, contenant :
40 à 100 % en poids du mélange de polymères A,
0 à 60 % en poids de polymère B et
0 à 40 % en poids de minéraux C,
rapporté à chaque fois au poids total de la matière à mouler, et la somme de A, B et C est égale à 100 % en poids.

5. Matière à mouler selon l'une des revendications 1 à 4, **caractérisée en ce que** la taille de particules du modificateur de résilience b est au moins égale à 50 nm et au maximum égale à 10 µm.

6. Matière à mouler selon l'une des revendications 1 à 5, **caractérisée en ce que** le polymère a est un copolymère de styrène et acrylonitrile (SAN) constitué de 18 à 35 % en poids d'acrylonitrile et de 82 à 65 % en poids de styrène.

7. Matière à mouler selon l'une des revendications 1 à 6, **caractérisée en ce que** le modificateur de résilience b présente des distributions bi-, tri- ou multimodales des tailles de particules.

8. Matière à mouler selon l'une des revendications 1 à 7, **caractérisée en ce que** le modificateur de résilience b est un modificateur de résilience ABS b comprenant
b1 : 40 à 90 % en poids d'une base de greffage constituée de :
b11 : 70 à 100 % en poids, de préférence 90 à 100 % en poids de butadiène,
b12 : 0 à 30 % en poids, de préférence 0 à 10 % en poids de styrène, et
b2 : 10 à 60 % en poids d'une greffe constituée de :
b21 : 65 à 95 % en poids de styrène,
b22 : 5 à 35 % en poids d'acrylonitrile, et
b23 : 0 à 30 % en poids de MMA.

9. Matière à mouler selon l'une des revendications 1 à 8, **caractérisée en ce que** le modificateur de résilience b présente une distribution trimodale des tailles de particules et est un mélange de copolymères ABS greffés b', b" et b''', la base de greffage b1' du copolymère ABS greffé b' possédant un diamètre de particule moyen d₅₀ de 25 à 200 nm, la base de greffage b1" du copolymère ABS greffé b" un diamètre de particule moyen d₅₀ de 230 à 330 nm et la base de greffage b''' du copolymère ABS greffé b''' un diamètre de particule moyen d₅₀ de 340 à 480 nm.

10. Matière à mouler selon l'une des revendications 1 à 9, **caractérisée en ce que**, dans le mélange de polymères A, la proportion du polymère a va de 75 à 95 % en poids, de préférence de 80 à 90 % en poids, et la proportion du modificateur de résilience b va de 5 à 25 % en poids, de préférence de 10 à 20 % en poids.

11. Matière à mouler selon l'une des revendications 1 à 9, **caractérisée en ce que**, dans le mélange de polymères A, la proportion du polymère a va de 65 à 95 % en poids, de préférence de 70 à 90 % en poids, de manière particulièrement préférée de 75 à 90 % en poids, et la proportion du modificateur de résilience b va de 5 à 35 % en poids, de préférence de 10 à 30 % en poids et de manière tout particulièrement préférée de 10 à 25 % en poids.

12. Matière à mouler selon l'une des revendications 1 à 9, **caractérisée en ce que**, dans le mélange de polymères A, la proportion du polymère a va de 30 à 60 % en poids, de préférence de 40 à 60 % en poids et de manière particulièrement préférée de 50 à 60 % en poids, et la proportion du modificateur de résilience b va de 40 à 70 % en poids, de préférence de 40 à 60 % en poids et de manière tout particulièrement préférée de 40 à 50 % en poids.

13. Matière à mouler selon l'une des revendications 1 à 12, **caractérisée en ce que** le coefficient de dilatation thermique linéique CDTL est inférieur à 100 x 10⁻⁶ K⁻¹.

14. Matière à mouler selon l'une des revendications 1 à 13, **caractérisée en ce que** la teneur en monomères résiduels n'est pas supérieure à 2000 ppm.

15. Matière à mouler selon l'une des revendications 1 à 14, **caractérisée en ce que** la teneur en solvant n'est pas supérieure à 1000 ppm.

16. Matière à mouler selon l'une des revendications 1 à 15, **caractérisée en ce que** la teneur en métaux de transition n'est pas supérieure à 500 ppm.

17. Utilisation de la matière à mouler selon l'une des revendications 1 à 16 pour l'impression en 3D.

18. Utilisation de la matière à mouler selon la revendication 12 pour produire des filaments destinés à l'impression en 3D.

19. Utilisation de la matière à mouler selon l'une des revendications 1 à 17 dans des imprimantes en 3D destinées à un usage domestique.

20. Procédé de fabrication d'articles façonnés en trois dimensions à partir de la matière à mouler selon l'une des revendications 1 à 16 par dépôt de matière fondue, dans lequel, dans une imprimante en 3 dotée d'une buse chauffante qui peut se déplacer librement dans le plan de fabrication, un filament alimenté à partir de la matière à mouler est liquéfié, la matière à mouler liquéfiée est extrudée et déposée par couches puis solidifiée.

21. Procédé selon la revendication 20, **caractérisé en ce que** l'on fait fondre les filaments fabriqués à partir de la matière à mouler de l'invention selon la revendication 10 dans une imprimante en 3D en utilisant un diamètre de buse chauffante de 0,3 à 0,8 mm à une température de buse de 200 à 270°C et on extrude la matière à mouler fondue à une vitesse d'extrusion de 60 à 180 mm/s, de préférence de 80 à 160 mm/s.

22. Procédé de détermination de la qualité d'impression d'un article façonné en trois dimensions fabriqué selon la revendication 20, **caractérisé en ce que** le ratio de la largeur du boudin extrudé sur la longueur d'arête minimale ou le ratio de la largeur du boudin extrudé sur le diamètre minimal de l'article façonné en trois dimensions est d'au moins 1:20, de préférence au moins 1:50, de manière particulièrement préférée au moins 1:100 et de manière tout particulièrement préférée 1:250.
